# EUROPÄISCHE PATENTSCHRIFT

(11) **EP 2 483 569 B1**
(45) Veröffentlichungstag und Bekanntmachung des Hinweises auf die Patenterteilung: **24.12.2014**
(21) Anmeldenummer: 10763624.3
(22) Anmeldetag: 04.10.2010
(51) Int. Cl.: F16B 37/12

(54) **EINFORMBARER DRAHTGEWINDEEINSATZ, VERFAHREN ZU SEINER HERSTELLUNG, BAUTEIL MIT EINFORMBAREM DRAHTGEWINDEEINSATZ SOWIE EIN VERFAHREN ZU SEINER HERSTELLUNG**
MOLDABLE WIRE THREAD INSERT, METHOD FOR THE PRODUCTION THEREOF, COMPONENT COMPRISING MOLDABLE WIRE THREAD INSERT AND A METHOD FOR THE PRODUCTION THEREOF
INSERT DE FILETAGE EN FIL MÉTALLIQUE CONFORMABLE, PROCÉDÉ DE FABRICATION CORRESPONDANT, COMPOSANT POURVU D'UN TEL INSERT DE FILETAGE EN FIL MÉTALLIQUE CONFORMABLE, ET PROCÉDÉ DE FABRICATION CORRESPONDANT

(30) Priorität: 02.10.2009 DE 102009048160
(43) Veröffentlichungstag der Anmeldung: 08.08.2012
(73) Patentinhaber: Böllhoff Verbindungstechnik GmbH, 33649 Bielefeld (DE)
(72) Erfinder: GRUBERT, Klaus, Friedrich, 31675 Bückeburg (DE); STUMPF, Michael, 33611 Bielefeld (DE); SUTZ, Xavier, F-73420 Voglans (FR); RINTELMANN, Jochen, 06844 Dessau-Rosslau (DE)
(74) Vertreter: Heyer, Volker
(86) Internationale Anmeldenummer: PCT/EP2010/006053
(87) Internationale Veröffentlichungsnummer: WO 2011/038939

(56) Entgegenhaltungen:
- DE-U1-202006 012 713
- GB-A- 610 869
- US-A- 2 672 070
- US-A- 3 945 070

## Beschreibung

### 1. Gebiet der Erfindung

Die vorliegende Erfindung betrifft einen einformbaren Drahtgewindeeinsatz zur Verstärkung einer Einschrauböffnung eines Bauteils. Des Weiteren ist die vorliegende Erfindung auf ein Verfahren zur Herstellung des einformbaren Drahtgewindeeinsatzes sowie auf ein Bauteil mit diesem einformbaren Drahtgewindeeinsatz gerichtet. Zudem betrifft die vorliegende Erfindung ein Herstellungsverfahren für ein Bauteil mit diesem einformbaren Drahtgewindeeinsatz.

### 2. Hintergrund der Erfindung

Im Stand der Technik sind Drahtgewindeeinsätze allgemein bekannt. Diese Drahtgewindeeinsätze werden in Bohrungen mit Innengewinde eingesetzt, um diese Bohrungen zu verstärken. Dies ist beispielsweise dann notwendig, wenn eine zu befestigende Schraube aus einem härteren Material besteht als das Bauteil, in dem die Bohrung angeordnet ist, und daher Relaxationseffekte im Bauteilmaterial kompensiert werden müssen. Diese Drahtgewindeeinsätze sind derart gewickelt, dass sie einen größeren Innendurchmesser als der des später zu bildenden Gewindes in der Bohrung aufweisen. Zudem sind die Wicklungen der zylindrischen Spirale des Drahtgewindeeinsatzes in axialer Richtung ähnlich einer Feder voneinander beabstandet. In einem federvorgespannten Zustand wird der Drahtgewindeeinsatz in eine Gewindebohrung eingesetzt, so dass er sich aufgrund seines Bestrebens, sich wieder auszudehnen, selbst in der Gewindebohrung befestigt. Derartige Drahtgewindeeinsätze sind beispielsweise aus der internationalen Patentanmeldung WO 2005/124165 A1 bekannt.

Des Weiteren sind Drahtgewindeeinsätze bekannt, in deren zylindrischer Spirale benachbarte Wicklungen aneinander anliegen, so dass die Innenwand der zylindrischen Spirale bereits ein Standardgewinde bereitstellt. Die einzelnen Wicklungen der zylindrischen Spirale sind an der radialen Außenwand der zylindrischen Spirale scharfkantig ausgebildet, so dass die zylindrische Spirale eine selbstschneidende zylindrische Außenwand aufweist. Bei derart geformten Drahtgewindeeinsätzen, die beispielsweise in der internationalen Patentanmeldung WO 2007/147196 A1 offenbart sind, ist es nicht mehr erforderlich, den Drahtgewindeeinsatz in ein vorgefertigtes Gewinde einer Bohrung einzusetzen. Vielmehr schneidet sich der Drahtgewindeeinsatz selbst in die Innenwand der Bohrung ein und wird auf diese Weise im Bauteil befestigt.

US 2,672,070 und EP 1 046 446 B1 beschreiben Verfahren, in denen Drahtgewindeeinsätze in einer Bauteilform positioniert werden, um diese bei der Bauteilherstellung in das Bauteil einzuformen. Die Bauteile werden beispielsweise aus Metall oder Kunststoff hergestellt.

US 3,945,070 beschreibt eine Gewindeöffnung in einem Kunststoff- oder Metallteil, die durch einen Drahtgewindeeinsatz verstärkt ist. Während der Herstellung dieses Teils wird ein Drahtgewindeeinsatz auf einem Stift positioniert und nachfolgend das Teil mit Gewindeöffnung um diesen Drahtgewindeeinsatz herum ausgeformt. Da der Drahtgewindeeinsatz zunächst ein größeres als das gewünschte Gewinde aufweist, erzeugt das Schrumpfen des Materials bei Abkühlung das abschließend gewünschte Gewinde in der Gewindeöffnung des Bauteils.

Die GB 610,869 beschreibt einen zu einer Buchse gewickelten Drahtgewindeeinsatz. In diesem Drahtgewindeeinsatz liegen benachbarte Windungen aneinander an. Um den Zusammenhalt dieser Windungen zu unterstützen sowie ein Materialeindringen von außen zu vermeiden, wird dieser Drahtgewindeeinsatz von außen beschichtet. Für eine derartige dünne Beschichtung eignet sich beispielsweise eine Metallschicht.

DE 20 2006 012 713 U1 offenbart eine Gewindehülse mit einem zu einer Hülse geformten wendelförmig verlaufenden Materialstrang. Dieser Materialstrang weist auf der inneren und auf der äußeren Hülsenoberfläche Flanken eines Gewindeprofils auf. Des Weiteren sind die einzelnen Gewindegänge über jeweils formschlüssige Verbindungen fest miteinander verbunden.

Die oben beschriebenen Arten von Drahtgewindeeinsätzen sowie die verschiedenen Verfahren zu deren Einsatz in einer Bauteilbohrung haben den Nachteil, dass sich im Zuge des Gebrauchs der Bauteilöffnung mit Drahtgewindeeinsatz dieser in der Bauteilöffnung lockert und nicht mehr ausreichend die darin befestigte Schraube oder ein ähnliches Befestigungselement unterstützt. Im schlechtesten Fall wird das Befestigungselement nicht mehr in der Bauteilöffnung gehalten und kann seine Funktion nicht mehr erfüllen. Als Konsequenz ist ein Austausch des Bauteils oder eine Vergrößerung der Bauteilöffnung und ein Einsetzen eines neuen Drahtgewindeeinsatzes sowie die Verwendung eines in seinem Durchmesser angepassten Befestigungselements erforderlich. Dies ist aufwendig und teilweise konstruktiv unmöglich. Des Weiteren ist von Nachteil, dass ein derartiger Umbau Stillstandzeiten beispielsweise einer ständig benutzten Maschine zur Folge hat.

Es ist daher die Aufgabe vorliegender Erfindung, einen einformbaren Drahtgewindeeinsatz sowie ein Verfahren zu seiner Herstellung bereitzustellen, der die Nachteile des Standes der Technik überwindet. Zudem soll ein Verfahren zur Herstellung eines Bauteils mit diesem eingeformten Drahtgewindeeinsatz bereitgestellt werden.

### 3. Zusammenfassung vorliegender Erfindung

Die obigen Aufgaben werden durch einen einformbaren Drahtgewindeeinsatz gemäß Anspruch 1, ein Bauteil mit diesem einformbaren Drahtgewindeeinsatz gemäß Anspruch 14, ein Herstellungsverfahren für den einformbaren Drahtgewindeeinsatz gemäß Anspruch 15, ein Herstellungsverfahren für ein Bauteil mit diesem eingeformten Drahtgewindeeinsatz gemäß Anspruch 25 sowie durch eine Wickelspindel zum Herstellen des einformbaren Drahtgewindeeinsatzes gemäß Anspruch 28 gelöst. Vorteilhafte Ausgestaltungen und Weiterentwicklungen vorliegender Erfindung gehen aus der Beschreibung, den Zeichnungen sowie den anhängenden Ansprüchen hervor.

Der erfindungsgemäße einformbare Drahtgewindeeinsatz zur Verstärkung einer Einschrauböffnung eines Bauteils weist die folgenden Merkmale auf: eine aus einem wendelförmig gewickelten Draht gebildete zylindrische Spirale, deren benachbarte Wicklungen derart angeordnet sind, dass eine geschlossene zylindrische Spiralwand vorliegt, während mindestens ein Ende der zylindrischen Spirale einen Befestigungsflansch aufweist, der sich radial auswärts über die zylindrische Spiralwand hinaus erstreckt und mit dem der Drahtgewindeeinsatz im Bauteil verankerbar ist, und/oder ein Ende der zylindrischen Spirale plan ausgebildet ist, um eine ebene axiale Stirnfläche zu bilden.

Der erfindungsgemäße einformbare Drahtgewindeeinsatz wird durch eine auf Block gewickelte Drahtspirale gebildet. Auf Block gewickelt bedeutet in diesem Fall, dass benachbarte Drahtwicklungen der Spirale derart aneinander anliegen, dass eine annähernd geschlossene Spiralwand des einformbaren Drahtgewindeeinsatzes gebildet wird. Die Drahtwicklungen bilden auf diese Weise eine feste Buchse. Das Anliegen der benachbarten Wicklungen der zylindrischen Spirale gewährleistet, dass bei einem Einformen des Drahtgewindeeinsatzes beispielsweise in ein Kunststoffbauteil beim Spritzgießen kein Kunststoff durch die Spiralwand in das Innere des Drahtgewindeeinsatzes eindringen kann. Gleichzeitig ist jedoch ein ausreichendes Verankern des einformbaren Drahtgewindeeinsatzes in dem Kunststoffbauteil gewährleistet. Dies erfolgt einerseits über die radiale zylindrische Außenwand des Drahtgewindeeinsatzes sowie über den erfindungsgemäßen Befestigungsflansch an mindestens einem Ende der zylindrischen Spirale. Dieser Befestigungsflansch ragt im Vergleich zur zylindrischen Spirale radial nach außen vor und wird nahezu vollständig vom Material des Bauteils umschlossen. Auf diese Weise verankert sich der Befestigungsflansch im Material des Bauteils und verhindert ein Verdrehen oder anderweitiges Versetzen des einformbaren Drahtgewindeeinsatzes im Bauteil. Gemäß bevorzugter Ausführungsformen vorliegender Erfindung wird der Befestigungsflansch an nur einem oder beiden Enden der zylindrischen Spirale vorgesehen. Sollte der Befestigungsflansch nur einseitig an der zylindrischen Spirale angeordnet sein, dient er ebenfalls als eindeutiges Sortierkriterium für die automatische Handhabung des einformbaren Drahtgewindeeinsatzes.

Der Befestigungsflansch umfasst mindestens eine Flanschwicklung des gewickelten Drahts, die im Vergleich zur zylindrischen Spirale eine reduzierte, vorzugsweise keine, Steigung aufweist. Gemäß einer weiteren bevorzugten Ausführungsform umfasst der Befestigungsflansch mindestens zwei in radialer Richtung der zylindrischen Spirale übereinanderliegende Wicklungen des gewickelten Drahts.

Der Befestigungsflansch des erfindungsgemäßen einformbaren Drahtgewindeeinsatzes besteht aus dem gleichen gewickelten Draht wie die übrige zylindrische Spirale. Da dieser gewickelte Draht am Ende der zylindrischen Spirale nur anders gewickelt wird als der übrige Drahtgewindeeinsatz, ist der erfindungsgemäße Drahtgewindeeinsatz auf einfache Weise herstellbar. In Abhängigkeit von dem Bauteilmaterial, in dem der einformbare Drahtgewindeeinsatz befestigt werden soll, ist die Größe des Befestigungsflansches variierbar. Zu diesem Zweck werden zwei in radialer Richtung der zylindrischen Spirale übereinanderliegende Wicklungen oder auch mehrere Wicklungen zur Bildung des Befestigungsflanschs angeordnet. Die radial äußere Wicklung des Befestigungsflansches ist mindestens teilweise , bevorzugt vollständig, um die Spirale umlaufend ausgebildet.

Gemäß einer weiteren bevorzugten Ausführungsform vorliegender Erfindung umfasst der Befestigungsflansch eine erste Wicklung, die sich entlang eines Umfangssegments des Befestigungsflansches beginnend am Ende der zylindrischen Spirale über einen Winkel von mindestens 180°, vorzugsweise 180° bis 270° und weiter bevorzugt von 180° bis 360°, erstreckt. Gemäß dieser Ausführungsform ist die erste Wicklung des Befestigungsflansches radial auswärts bezogen auf den Umfang der zylindrischen Spirale angeordnet. Diese erste Wicklung erstreckt sich aber nicht entlang des vollständigen Umfangs der zylindrischen Spirale, d.h. über ein Umfangs- oder Kreissegment von 360°. Stattdessen verläuft die erste Wicklung entlang eines Umfangssegments des Befestigungsflansches, das sich über einen Winkel von mindestens 180° erstreckt. Bereits dieses Umfangssegment radial auswärts bezogen auf die zylindrische Spirale sorgt für eine ausreichende Verankerung des einformbaren Drahtgewindeeinsatzes während des Einformens in einem herzustellenden Bauteil. Zudem ist ein derart ausgebildeter Befestigungsflansch ebenfalls als Sortierkriterium bei der Handhabung der einformbaren Drahtgewindeeinsätze nutzbar.

Gemäß einer weiteren bevorzugten Ausgestaltung vorliegender Erfindung umfasst der Befestigungsflansch eine vollständige erste Wicklung und eine zweite Wicklung, die sich entlang eines Umfangssegments des Befestigungsflansches beginnend am Ende der ersten Wicklung über einen Winkel von mindestens 180°, vorzugsweise 180° bis 270° und weiter bevorzugt von 180° bis 360° erstreckt. Gemäß dieser bevorzugten Ausführungsform ist die zweite Wicklung des Befestigungsflansches ähnlich der oben beschriebenen ersten Wicklung des Befestigungsflansches ausgebildet, nur dass sie sich an eine vollständig umlaufende erste Wicklung des Befestigungsflansches anschließt.

Um in Ergänzung zum Befestigungsflansch eine weitere Verdrehsicherung des einformbaren Drahtgewindeeinsatzes bereitzustellen, weist bevorzugt die zylindrische Spiralwand an einer radialen Außenseite mindestens eine in Längsrichtung der zylindrischen Spirale verlaufende Nut, vorzugsweise eine Mehrzahl von Nuten, auf. Zudem ist vorzugsweise ein Querschnitt des gewickelten Drahts des Drahtgewindeeinsatzes radial auswärts bezogen auf die zylindrische Spirale mit einer Winkelkontur mit zwei Flanken ausgestattet, die einen Winkel < 60°, vorzugsweise einen Winkel zwischen 30° und 40°, einschließen. Mit Hilfe dieser spitzwinkligen Kontur an der Außenseite der zylindrischen Spirale, die sich im Bauteilmaterial verankert, wird in Abhängigkeit von der Größe des Flankenwinkels ein ausreichender Widerstand des Drahtgewindeeinsatzes gegen Scherbelastung erzeugt. Dies unterstützt die Befestigung des Drahtgewindeeinsatzes und dessen Halt im Bauteil. Zudem werden Radialspannungen am Drahtgewindeeinsatz durch diese Formgebung reduziert. Weist der einformbare Drahtgewindeeinsatz an seiner Innenseite ein bevorzugtes Standardgewinde auf, so umfasst der gewickelte Draht aufgrund der sich im Material verankernden Winkelkontur an der radialen Außenseite der zylindrischen Spirale ein asymmetrisches Querschnittsprofil.

Gemäß einer weiteren bevorzugten Ausführungsform weist das Ende des Drahtgewindeeinsatzes, das gegenüber dem Ende mit Befestigungsflansch angeordnet ist, einen radial einwärts ragenden Zapfen oder eine freie Durchgangsöffnung auf. Gemäß unterschiedlicher Alternativen der bevorzugten Konstruktion des Drahtgewindeeinsatzes ist dieser Zapfen entfernbar oder nicht. Der Zapfen unterstützt ein Positionieren des Drahtgewindeeinsatzes auf einem Stift während des Herstellens eines Bauteils mit diesem einformbaren Drahtgewindeeinsatz (s. unten).

Vorliegende Erfindung umfasst zudem ein Bauteil bestehend aus Kunststoff oder Metall, in dem ein einformbarer Drahtgewindeeinsatz gemäß einer der oben beschriebenen Alternativen eingeformt ist.

Zudem umfasst vorliegende Erfindung ein Herstellungsverfahren eines einformbaren Drahtgewindeeinsatzes zur Verstärkung einer Einschrauböffnung eines Bauteils. Das Herstellungsverfahren umfasst die folgenden Schritte: Wickeln eines Drahts zu einer zylindrischen Spirale mit einem Durchmesser derart, dass benachbarte Wicklungen der zylindrischen Spirale eine erste Steigung aufweisen und eine zylindrische Spiralwand bilden, und Erzeugen eines radial auswärts über die Spiralwand hinausstehenden Befestigungsflansches an mindestens einem Ende der Spirale oder plan Schleifen der zylindrischen Spirale an mindestens einem Ende der Spirale, vorzugsweise Trennschleifen der zylindrischen Spirale. Der Befestigungsflansch wird vorzugsweise durch Wickeln von mindestens einer Wicklung der Spirale ohne Steigung an einem Ende der Spirale erzeugt. Es ist weiterhin bevorzugt, dass mindestens zwei in radialer Richtung der zylindrischen Spirale übereinanderliegende Wicklungen des gewickelten Drahts gewickelt werden, um den Befestigungsflansch zu bilden.

In weiterer Ausgestaltung des oben genannten Verfahrens erfolgt ein Wickeln von mindestens einer Wicklung der Spirale an einem Ende der Spirale mit einer gegenüber der ersten Steigung reduzierten Steigung, um den Befestigungsflansch zu bilden. Der herzustellende Drahtgewindeeinsatz, der in einem Bereich die zylindrische Spirale und im Endbereich der zylindrischen Spirale den mindestens einen Befestigungsflansch aufweist, wird im Bereich des Befestigungsflansches und im Bereich der Spirale mit unterschiedlichen Steigungen des Drahts gewickelt. Diese unterschiedlichen Steigungen werden unter anderem dadurch erzeugt, dass während des Wickelns ein unterschiedlich starker Versatz des zuzuführenden Drahtes im Verhältnis zu dem bereits gewickelten Drahtgewindeeinsatz genutzt wird. Auf diese Weise entstehen Wicklungen mit unterschiedlich starker Steigung im Bereich der Spirale und im Bereich des Befestigungsflansches.

Gemäß einer weiteren Ausgestaltung vorliegenden Verfahrens erfolgt das Wickeln des Befestigungsflansches derart, dass der Befestigungsflansch einen größeren Durchmesser aufweist als die Spirale. Bevorzugt umfasst das Ende der Spirale mindestens zwei in radialer Richtung der zylindrischen Spirale annähernd übereinanderliegende Wicklungen des gewickelten Drahts. Es ist ebenfalls bevorzugt, Wicklungen des Befestigungsflansches über ein Umfangssegment zu wickeln, deren Form bereits oben beschrieben worden ist.

Es ist zudem bevorzugt, den Draht auf eine Wickelspindel zu wickeln, wobei die Wickelspindel einen ersten zylindrischen Bereich zum Wickeln der zylindrischen Spirale und eine im Vergleich zum zylindrischen Bereich zweiten in radialer Richtung aufgeweiteten Bereich zum Wickeln des Befestigungsflansches umfasst.

Vorzugsweise wird zum Herstellen des einformbaren Drahtgewindeeinsatzes eine Wickelspindel eingesetzt, die in axialer Richtung gesehen zwei unterschiedliche Bereiche aufweist. In einem ersten zylindrischen Bereich der Wickelspindel ist ein Gewinde vorgesehen, um darauf die zylindrische Spirale des späteren Drahtgewindeeinsatzes zu wickeln. An diesem ersten zylindrischen Bereich schließt sich ein zweiter Bereich an, mit dessen Hilfe der Befestigungsflansch gewickelt wird. Gemäß einer ersten Ausführungsformen bildet der zweite Bereich einen Absatz im Vergleich zum ersten Bereich, so dass während des Wickelns der Draht gegen diesen Absatz gewickelt wird. Gemäß einer zweiten Ausführungsform ist der zweite Bereich in radialer Richtung im Vergleich zum ersten Bereich aufgeweitet, so dass während des Wickelns der Draht auf diesen aufgeweiteten Bereich gewickelt wird. Im Hinblick auf den aufgeweiteten Bereich der Wickelspindel ist es zudem bevorzugt, dass sich dieser stetig oder stufenförmig aufweitet. Basierend auf dieser Formgebung der Wickelspindel wird die Geometrie des Befestigungsflansches und/oder die Anordnung der Wicklungen des Befestigungsflansches beeinflusst.

Es ist weiterhin bevorzugt, den Draht derart auf die Wickelspindel zu wickeln, dass eine Längsachse der Wickelspindel in Wickelrichtung des Drahtgewindeeinsatzes und eine Drahtzufuhrrichtung des zu wickelnden Drahts einen Winkel β ≥ 90° einschließen. Mit Hilfe dieser gezielten Winkeleinstellung zwischen der Drahtzufuhrrichtung und der Längsachse der Wickelspindel in Wickelrichtung wird der Draht des herzustellenden Drahtgewindeeinsatzes bevorzugt mit inneren mechanischen Spannungen versehen. Nach dem Abspindeln des hergestellten Drahtgewindeeinsatzes von der Wickelspindel sorgen diese eingeprägten mechanischen Spannungen dafür, dass sich der einformbare Drahtgewindeeinsatz in axialer Richtung derart zusammenzieht, dass benachbarte Wicklungen aneinander anliegen. Dies gilt bevorzugt sowohl für die Wicklungen der zylindrischen Spirale wie auch für die Wicklungen des Befestigungsflansches. Dadurch wird der einformbare Drahtgewindeeinsatz nach außen hin abgedichtet, so dass bei einem späteren Einformen des einformbaren Drahtgewindeeinsatzes beispielsweise im Kunststoff kein Kunststoff in das Innere des einformbaren Drahtgewindeeinsatzes dringen kann. Zudem wird an der Innenseite der zylindrischen Spirale ein Gewinde ähnlich einer Gewindebuchse ausgebildet. Dieses Gewinde ist vorzugsweise ein metrisches oder zölliges Gewinde.

Es ist zudem bevorzugt, die Wickelspindel und die Zufuhrposition des zuzuführenden Drahts relativ zueinander mit unterschiedlichen Beträgen zu versetzen, während der Draht auf den ersten und den zweiten Bereich der Wickelspindel gewickelt wird. Auch dieser unterschiedliche Versatz der Wickelspindel in ihrer Längsrichtung in Bezug auf die Zufuhrrichtung bzw. die Zufuhrposition des zu wickelnden Drahts beeinflusst, wie nach einem Abspindeln des hergestellten Drahtgewindeeinsatzes benachbarte Wicklungen der zylindrischen Spirale und des Befestigungsflansches aneinander anliegen.

Es ist weiterhin bevorzugt, den einformbaren Drahtgewindeeinsatz mit einem radial einwärts stehenden Zapfen in Bezug auf die zylindrische Spirale herzustellen. Zu diesem Zweck umfasst das Herstellungsverfahren vorzugsweise ein Einhaken des zu wickelnden Drahts in eine Kerbe der Wickelspindel und ein Erzeugen des radial einwärts stehenden Zapfens am flanschabgewandten Ende der Spirale durch Aufwickeln des Drahts auf die Wickelspindel.

Weiterhin umfasst vorliegende Erfindung ein Herstellungsverfahren eines Bauteils mit einem eingeformten Drahtgewindeeinsatz, der eine aus einem wendelförmig gewickelten Draht gebildete zylindrische Spirale aufweist, von der mindestens ein Ende einen Befestigungsflansch umfasst, der sich radial auswärts über die zylindrische Spirale hinaus erstreckt. Das herzustellende Bauteil besteht aus Kunststoff, Metall oder einem anderen geeigneten Werkstoff. Vorzugsweise wird bei Metallbauteilen Leichtmetall eingesetzt, wie Aluminium, Magnesium oder dergleichen. Das oben genannte Herstellungsverfahren weist die folgenden Schritte auf: Positionieren des Drahtgewindeeinsatzes auf einem Stift, Anordnen des Stifts mit Drahtgewindeeinsatz in einer Form derart, dass nach einem Ausformen des Bauteils der Befestigungsflansch angrenzend an eine Bauteiloberfläche angeordnet ist, Füllen der Form mit Metall oder Kunststoff und Ausformen des Bauteils mit Drahtgewindeeinsatz aus der Form.

Um den Drahtgewindeeinsatz geeignet positionieren zu können, wird dieser bevorzugt auf den Stift aufgespindelt, der zu diesem Zweck ein zum Drahtgewindeeinsatz passendes Gewinde aufweist. Gemäß einer anderen Alternative ist es bevorzugt, den Drahtgewindeeinsatz auf den Stift ohne Gewinde aufzustecken. Nachfolgend wird der Stift mit Drahtgewindeeinsatz in der Form angeordnet und befestigt, so dass während des Einbringens des Materials des Bauteils der positionierte Drahtgewindeeinsatz seine Position beibehält.

Sollte der Drahtgewindeeinsatz als Positionierhilfe einen radial nach innen ragenden Zapfen an dem dem Befestigungsflansch abgewandten Ende des Drahtgewindeeinsatzes aufweisen, dient er beispielsweise als Anschlag beim Aufstecken des Drahtgewindeeinsatzes auf den Stift ohne Gewinde.

Des Weiteren umfasst vorliegende Erfindung eine Wickelspindel zum Wickeln eines einformbaren Drahtgewindeeinsatzes, die die folgenden Merkmale aufweist: einen ersten zylindrischen Bereich mit einem Gewinde und einen zweiten Bereich, der in radialer Richtung verglichen zum ersten Bereich aufgeweitet ist, so dass mit Hilfe des zweiten Bereichs der Befestigungsflansch des einformbaren Drahtgewindeeinsatzes herstellbar ist. Gemäß einer weiteren Ausgestaltung der Wickelspindel ist der zweite aufgeweitete Bereich stetig oder stufenförmig im Vergleich zum ersten Bereich aufgeweitet oder er ist einstufig ausgebildet und stellt einen Absatz im Vergleich zum ersten zylindrischen Bereich dar. Somit ist der zweite Bereich bevorzugt in einem Winkel von 90° bis 120° zur Längsachse der Wickelspindel (70) angeordnet.

Gemäß einer bevorzugten Ausführungsform ist an einem Ende des ersten zylindrischen Bereichs eine Kerbe vorgesehen, in der ein zu wickelnder Draht befestigbar ist, um beim Wickeln des Drahtgewindeeinsatzes einen radial nach innen stehenden Zapfen zu bilden.

### 4. Kurze Beschreibung der begleitenden Zeichnungen

Die bevorzugten Ausführungsformen vorliegender Erfindung werden unter Bezugnahme auf die begleitende Zeichnung näher erläutert. Es zeigen:
- Fig. 1: eine perspektivische Ansicht einer bevorzugten Ausführungsform eines Drahtgewindeeinsatzes mit Befestigungsflansch,
- Fig. 2: eine seitliche Ansicht der Ausführungsform aus Fig. 1,
- Fig. 3: eine Schnittdarstellung mit Ausschnittsvergrößerung eines bevorzugten Drahtgewindeeinsatzes mit plangeschliffenen Enden,
- Fig. 4: eine weitere Ausschnittsdarstellung einer bevorzugten Ausführungsform eines Drahtgewindeeinsatzes,
- Fig. 5: eine schematische Darstellung einer bevorzugten Querschnittsform der Wicklungen des Drahtgewindeeinsatzes aus Fig. 1,
- Fig. 6: eine schematische Darstellung der Gestaltung der Außenwand des Drahtgewindeeinsatzes aus Fig. 1,
- Fig. 7: eine bevorzugte perspektivische Darstellung eines einformbaren Drahtgewindeeinsatzes mit zwei Befestigungsflanschen,
- Fig. 8: die bevorzugte Ausführungsform aus Fig. 7 in einer Schnittdarstellung,
- Fig. 9: eine Draufsicht auf einen bevorzugten Drahtgewindeeinsatz mit Befestigungsflansch und Screwlock,
- Fig. 10: eine Seitenansicht der Ausführungsform aus Fig. 9,
- Fig. 11: eine bevorzugte Herstellung des Drahtgewindeeinsatzes mit Hilfe einer Trennscheibe,
- Fig. 12: eine schematische Darstellung einer bevorzugten Wickelspindel,
- Fign. 13 A-C: eine schematische Darstellung eines bevorzugten Einformens des Drahtgewindeeinsatzes mit, ohne und mit zwei Befestigungsflanschen in einem Bauteil,
- Fig. 14: eine schematische Darstellung eines bevorzugten Einformens des Drahtgewindeeinsatzes mit Befestigungsflansch in einem Bauteil,
- Fig. 15: ein Flussdiagramm einer bevorzugten Herstellung von Drahtgewindeeinsätzen und

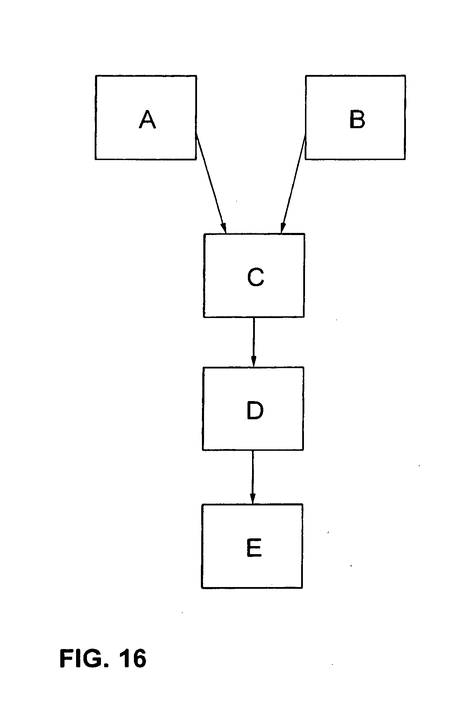

- Fig. 16: ein Flussdiagramm gemäß einer bevorzugten Herstellung eines Bauteils mit Drahtgewindeeinsatz.

### 5. Detaillierte Beschreibün der bevorzugten Ausführungsformen

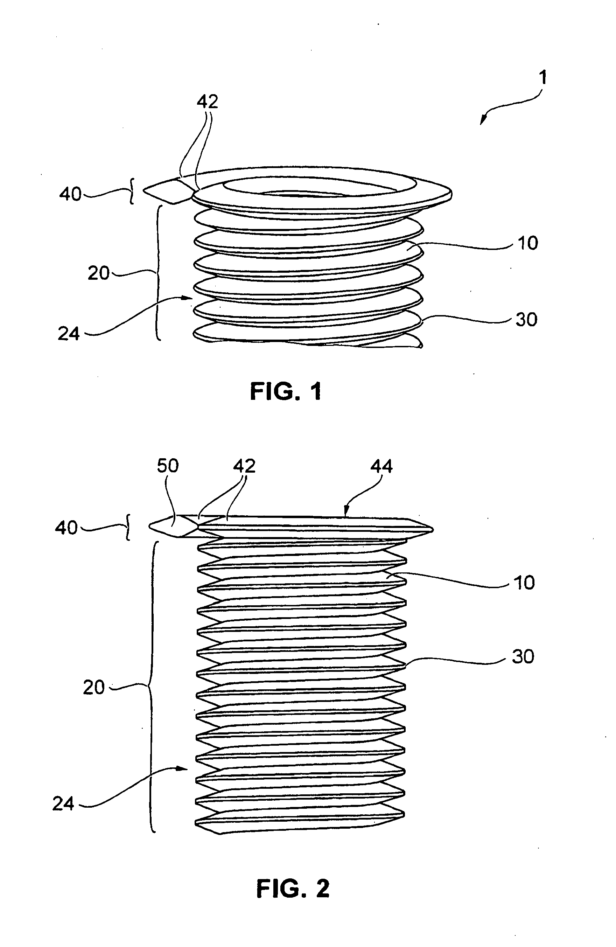

Figur 1 zeigt eine erste bevorzugte Ausführungsform eines einformbaren Drahtgewindeeinsatzes 1. Der Drahtgewindeeinsatz 1 dient der Verstärkung von Einschrauböffnungen eines Bauteils, um eine mechanische Überlastung des Bauteilmaterials beim Einschrauben eines Befestigungselements zu vermeiden. Zu diesem Zweck umfasst der Drahtgewindeeinsatz 1 eine zylindrische Spirale 20. Die zylindrische Spirale 20 wird bei der Herstellung des Drahtgewindeeinsatzes 1 aus einem Draht 10 wendelförmig gewickelt (S1). Die mit einer bestimmten Steigung gewickelten Wicklungen 30 der zylindrischen Spirale 20 bilden an der radialen Innenwand 22 der zylindrischen Spirale 20 ein Standardgewinde. Gemäß unterschiedlicher bevorzugter Ausführungsformen ist dieses Standardgewinde ein metrisches oder ein zölliges Gewinde. Das an der radialen Innenseite 22 der zylindrischen Spirale 20 ausgebildete Gewinde wird durch einen Querschnitt 50 des Drahts 10 und durch die Anordnung, im Speziellen die Steigung, der benachbarten Wicklungen 30 bestimmt.

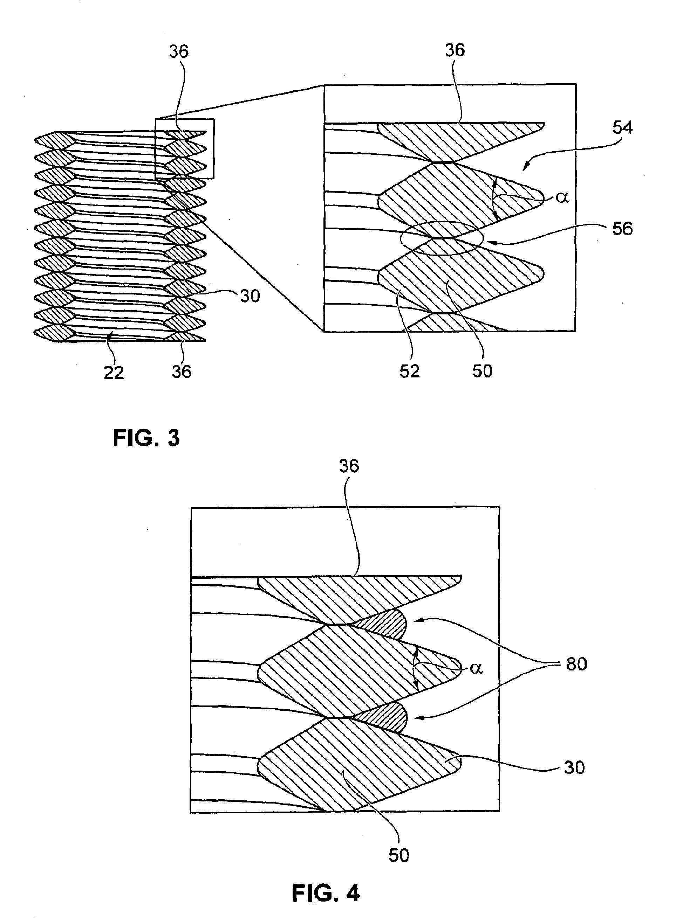

Da der Drahtgewindeeinsatz 1 in ein herzustellendes Bauteil einformbar ist, umfasst die zylindrische Spirale 20 eine geschlossene zylindrische umlaufende Spiralwand. Auf diese Weise wird während des Füllens (D) einer Form 90 bei der Bauteilherstellung der Drahtgewindeeinsatz 1 vom Bauteilmaterial umschlossen, ohne dass Bauteilmaterial in das Innere der zylindrischen Spirale eindringt. Um eine geschlossene zylindrisch umlaufende Spiralwand der Spirale 20 zu bilden, sind die benachbarten Wicklungen 30 entsprechend verschiedener Ausführungsformen des Drahtgewindeeinsatzes 1 angeordnet. Gemäß einer ersten Ausführungsform weist der Draht 10 einen beliebig geformten Querschnitt 50 auf und die möglichen Zwischenräume zwischen benachbarten Wicklungen 30 sind mittels einer Beschichtung oder Dichtmasse 80 abgedichtet (vgl. Figur 4).

Die Dichtmasse 80 wird beispielsweise während der Herstellung des Drahtgewindeeinsatzes 1 aufgespritzt oder durch Tauchen des Drahtgewindeeinsatzes 1 aufgebracht. Daher ist es ebenfalls bevorzugt, die zylindrische Spirale 20 an der Innenseite 22 und der Außenseite 24 mit der Dichtmasse 80 zu versehen.

Gemäß einer weiteren bevorzugten Ausführungsform vorliegender Erfindung umfasst der Querschnitt 50 des Drahts 10 des Drahtgewindeeinsatzes 1 einen Gewindebereich 52 sowie einen Verankerungsbereich 54 (vgl. Figur 3). Der Gewindebereich 52 und der Verankerungsbereich 54 sind über axiale Stirnflächen 56 bezogen auf die Längsachse der zylindrischen Spirale 20 miteinander verbunden. Die Stirnflächen 56 sind bevorzugt plan ausgebildet, so dass einander gegenüberliegende Stirnflächen 56 benachbarter Wicklungen 30 abdichtend aneinander anliegen. Dies ist in Figur 3 in einer Ausschnittsvergrößerung hervorgehoben.

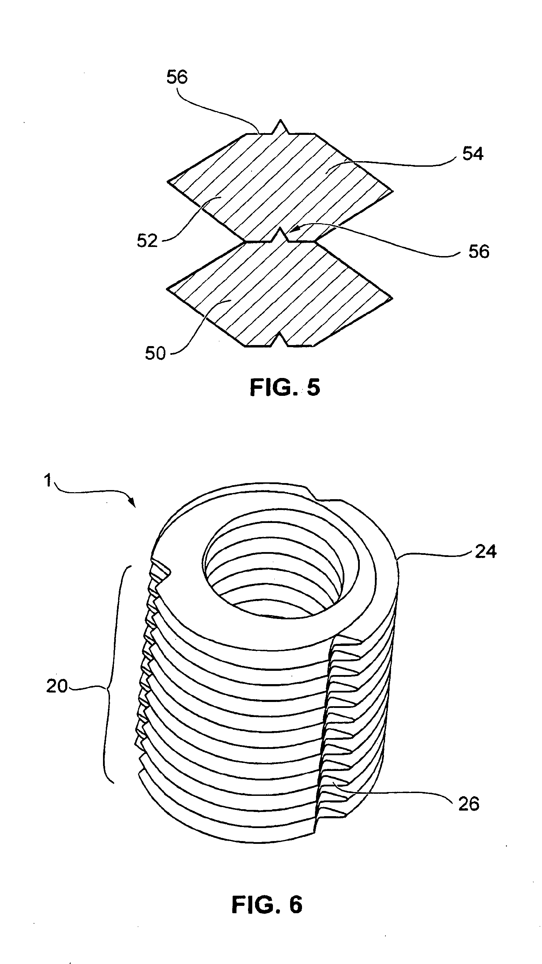

Gemäß einer in Figur 5 gezeigten Ausführungsform sind die gegenüberliegenden Stirnflächen 56 derart geformt, dass sie eine Labyrinthdichtung bilden. Dazu weisen die einander gegenüberliegenden Stirnflächen 56 benachbarter Wicklungen 30 beispielsweise eine Nut- und - Feder-Verbindung auf. Es ist ebenfalls jede andere Formgebung der Stirnflächen 56 denkbar, die den Zweck einer Labyrinthdichtung erfüllt, beispielsweise eine komplementäre Formgebung gegenüberliegender Stirnflächen 56.

Erfindungsgemäß umfasst der Drahtgewindeeinsatz 1 an einem Ende der zylindrischen Spirale 20 einen Befestigungsflansch 40. Der Befestigungsflansch 40 ragt radial auswärts über die Spiralwand 22, 24 der zylindrischen Spirale 20 hinaus, wie es in den Figuren 1, 2 und 9 dargestellt ist. Bevorzugt wird der Befestigungsflansch 40 durch mindestens eine Wicklung 42 gebildet. Die Wicklung 42 wird mit reduzierter oder ohne Steigung im Vergleich zu den übrigen Wicklungen 30 der Spirale 20 am Ende der zylindrischen Spirale 20 gewickelt (S2), so dass die Wicklung oder Wicklungen 42 des Befestigungsflansches 40 eine reduzierte und/oder keine Steigung im Vergleich zur Steigung der Spirale 20 aufweisen. Auf dieser konstruktiven Grundlage umfasst der Befestigungsflansch 40 gemäß einer Ausführungsform mindestens zwei in radialer Richtung der zylindrischen Spirale 20 übereinander liegende Wicklungen 42. Die radial äußere Wicklung 42 des Befestigungsflansches 40 ist zumindest teilweise, bevorzugt vollständig, um die Spirale 20 umlaufend ausgebildet. In Abhängigkeit davon, in welchem Bauteilmaterial der Befestigungsflansch 40 den Drahtgewindeeinsatz 1 befestigen soll, ist die Anzahl der übereinander liegenden Wicklungen 42 wählbar.

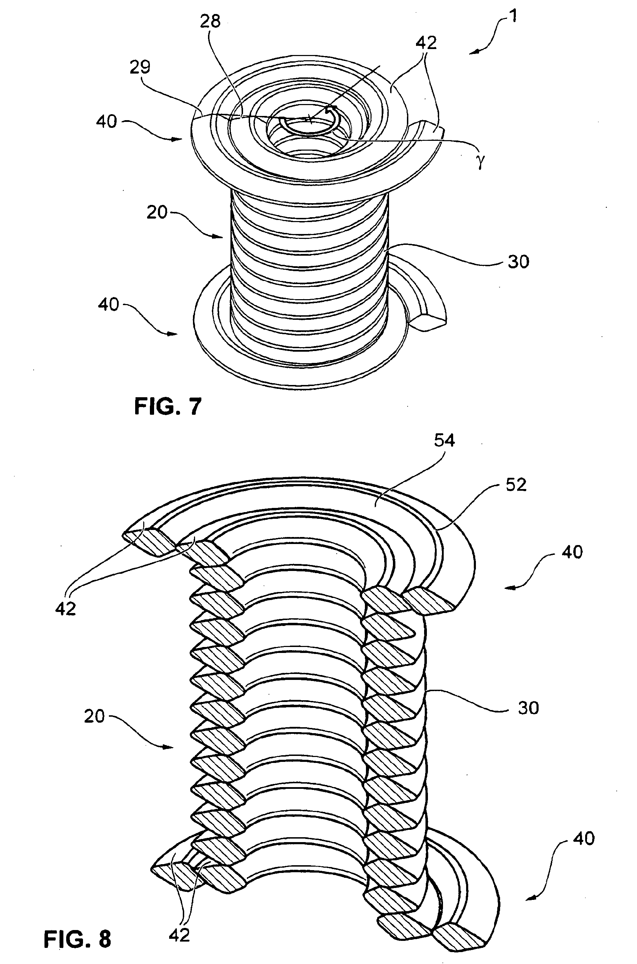

Gemäß einer weiteren bevorzugten Ausführungsform des Befestigungsflansches 40 weist dieser eine erste Wicklung 42 auf, die sich an das Ende 28 der zylindrischen Spirale 20 (vgl. Fig. 7) anschließt. Die erste Wicklung 42 erstreckt sich entlang eines Umfangssegments des Befestigungsflansches 40, das sich über einen bestimmten Winkel γ (vgl. Fig. 7) erstreckt. Der Winkel γ hat eine Mindestgröße von 180°, so dass sich die erste Wicklung 42 in Form des Umfangssegments um die Hälfte der zylindrischen Spirale 20 gesehen in Umfangsrichtung erstreckt. In weiterer Ausgestaltung dieser Ausführungsform ist das Umfangssegment der ersten Wicklung größer ausgebildet, so dass es sich über einen Winkel γ von 180° bis 270° und weiter bevorzugt von 180° bis 360° erstreckt. Eine weitere Ausgestaltung des Befestigungsflansches 40 umfasst eine vollständige erste Wicklung 42. Das bedeutet, dass sich die erste Wicklung 42 über ein Umfangssegment des Befestigungsflansches 40 mit einem Winkel γ = 360° beginnend am Ende 28 der zylindrischen Spirale 20 erstreckt. Eine sich an die erste Wicklung 42 anschließende zweite Wicklung 42 erstreckt sich ebenfalls entlang eines Umfangssegments des Befestigungsflansches 40. Das Umfangssegment der zweiten Wicklung 42 beginnt am Ende 29 der ersten Wicklung 42 (Fig. 7). Das Umfangssegment der zweiten Wicklung erstreckt sich ebenfalls über den Winkel γ, der größer als 180° ist. Vorzugsweise umfasst der Winkel γ 180° bis 270° und weiter bevorzugt 180° bis 360°.

Gemäß einer weiteren denkbaren Alternative erstreckt sich der Befestigungsflansch 40 über mehrere Wicklungen 30 der zylindrischen Spirale 20. In diesem Fall ist die Steigung der Wicklungen 42 des Befestigungsflansches 40 der Steigung der zylindrischen Spirale 20 entgegengesetzt. Es ist ebenfalls bevorzugt, dass der Befestigungsflansch 40 in eine Befestigungsspirale (nicht gezeigt) übergeht, die sich über einen Teil oder die gesamte Länge der zylindrischen Spirale 20 erstreckt. Benachbarte Wicklungen der Befestigungsspirale liegen bevorzugt nicht aneinander an, so dass Bauteilmaterial dazwischen eindringen kann und für ein zusätzliches Befestigen des Drahtgewindeeinsatzes 1 im Bauteil sorgt.

Auf Grund seiner Form bildet der Befestigungsflansch 40 eine Anlagefläche 44, die senkrecht zur Mittelachse der zylindrischen Spirale 20 angeordnet ist (vgl. Figur 2). Basierend auf dieser Geometrie ist es nicht mehr erforderlich, die Stirnseite des Drahtgewindeeinsatzes 1 mit Befestigungsflansch 40 abzuschleifen, um eine ebene Anlagefläche, beispielsweise in einer Form 90 zur Bauteilherstellung zu erzeugen. Die Anlagefläche 44 erleichtert dem Werker das stirnseitige Abdichten des Drahtgewindeeinsatzes bei der Bauteilherstellung. Zudem dient der Befestigungsflansch 40 als Positionierhilfe, wenn er zur Bauteilherstellung auf einen Stift 92 einer Form 90 aufgesteckt wird (Schritt B, vgl. Figuren 8, 9, 11). Der Befestigungsflansch 40 bringt in seinem eingebauten Zustand den weiteren Vorteil, dass Radialspannungen, die durch das Eindrehen und Anziehen einer Schraube im Drahtgewindeeinsatz 1 entstehen, weiter in Richtung der zylindrischen Spirale 20 und somit in das Bauteil hinein verlagert werden. Auf diese Weise wird die kritische Überlagerung von Druckspannungen, beispielsweise durch ein Anschraubteil am Bauteil und die Radialspannungen an den Gewindeflanken des Drahtgewindeeinsatzes 1 vermindert. Des Weiteren dient der Befestigungsflansch 40 vorteilhafterweise als konstruktive Unterstützung beim Ansetzen und Einführen eines Befestigungselements in den in das Bauteil eingeformten Drahtgewindeeinsatz 1. Des Weiteren stellt der Befestigungsflansch 40 auf Grund seines größeren Durchmessers im Vergleich zu der zylindrischen Spirale 20 ein eindeutiges Sortierkriterium dar, mit dessen Hilfe ein automatisches Handhaben des Drahtgewindeeinsatzes 1, beispielsweise beim Bestücken der Form 90 zur Bauteilherstellung, erleichtert wird.

Gemäß einer weiteren bevorzugten Ausführungsform ist an beiden Enden der zylindrischen Spirale 20 jeweils ein Befestigungsflansch 40 vorgesehen. Diese bevorzugte Ausführungsform ist in Fig. 7 in einer perspektivischen Ansicht sowie in Fig. 8 in einer perspektivischen Schnittdarstellung gezeigt. An beiden Enden der zylindrischen Spirale 20 mit geschlossener Spiralwand sind jeweils Wicklungen 42 angeordnet, die den Befestigungsflansch 40 bilden. Die Wicklungen 42 des Befestigungsflansches sind ebenfalls radial auswärts im Vergleich zur geschlossenen Spiralwand angeordnet.

Während der Herstellung des einformbaren Drahtgewindeeinsatzes 1 werden in axialer Richtung des Drahtgewindeeinsatzes 1 mechanische Spannungen in den Draht 10 eingeprägt, die ein Zusammenziehen der Wicklungen 30, 42 gegeneinander bewirken. Auf diese Weise liegen benachbarte Wicklungen 30 sowie 42 aneinander an, um das Innere des einformbaren Drahtgewindeeinsatzes 1 gegen seine Umgebung abzudichten. Dieses Zusammenziehen und Aneinanderanliegen benachbarter Wicklungen 30, 42 ist ebenfalls in der perspektivischen Schnittdarstellung in Fig. 8 erkennbar. Während im Bereich der zylindrischen Spirale 20 vorzugsweise die axialen Stirnseiten 56 der Wicklungen 30 aneinander anliegen, liegen im Bereich des Befestigungsflansches 40 zum Teil die Flanken des Gewindebereichs 52 an den Flanken des Verankerungsbereichs 54 an. Selbst wenn die Flanken des Gewindebereichs 52 und des Verankerungsbereichs 54 nur punktuell aneinander anliegen, sind die Wicklungen 42 des Befestigungsflanschs 40 derart angeordnet, dass sie eine Labyrinthdichtung bilden. Diese Labyrinthdichtung verhindert ein Eindringen von Material, beispielsweise Kunststoff, in das Innere des einformbaren Drahtgewindeeinsatzes. Dies gilt in gleicher Weise für Drahtgewindeeinsätze 1 mit einem oder zwei Befestigungsflanschen 40.

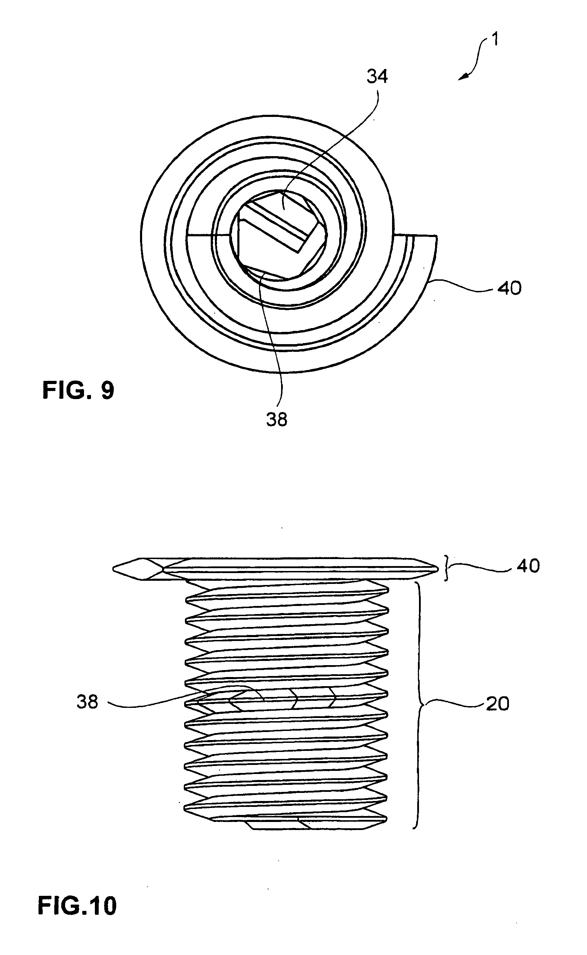

Gemäß einer weiteren bevorzugten Ausführungsform umfasst die zylindrische Spirale 20 des einformbaren Drahtgewindeeinsatzes 1 mindestens eine Wicklung 38, die als Verliersicherung einer in den Drahtgewindeeinsatz 1 eingeschraubten Schraube (nicht gezeigt) dient. Es ist ebenfalls bevorzugt, eine Mehrzahl dieser Wicklungen 38 vorzusehen. Wie man in Fig. 9 erkennen kann, verengt die Wicklung 38 den Innendurchmesser der zylindrischen Spirale 20 sekantenartig. Obwohl Klemmmomente für eine in den Drahtgewindeeinsatz 1 einzuschraubende Schraube (nicht gezeigt) erzielt werden sollen, muss ebenfalls beachtet werden, dass zwischen benachbarten Wicklungen 38 und 30 der zylindrischen Spirale 20 keine Abstände entstehen, die ein Eindringen von Material, wie beispielsweise Kunststoff, in das Innere des einformbaren Drahtgewindeeinsatzes 1 ermöglichen. Daher wird der kleinste Durchmesser, der durch eine Wicklung 38 gebildet wird, nach folgender Formel berechnet. Er ist gleich einem Kerndurchmesser des durch den Drahtgewindeeinsatz 1 zu bildenden Innengewindes abzüglich eines Zehntels des Nenndurchmessers des durch den Drahtgewindeeinsatz 1 zu bildenden Innengewindes. Bei Berücksichtigung dieser Formel wird bevorzugt gewährleistet, dass sowohl eine ausreichende Klemmung einer einzuschraubenden Schraube gegeben sowie ein Eindringen eines Materials, in das der Drahtgewindeeinsatz 1 eingeformt wird, verhindert ist. Eine seitliche Ansicht des einformbaren Drahtgewindeeinsatzes 1 mit Wicklung 38 ist in Fig. 10 dargestellt.

Der einformbare Drahtgewindeeinsatz 1 vorliegender Erfindung umfasst alternativ oder ergänzend zum Befestigungsflansch 40 ein Ende der zylindrischen Spirale 20, das plan ausgebildet ist. Dieses plan ausgebildete Ende der zylindrischen Spirale bildet eine ebene axiale Stirnfläche der zylindrischen Spirale und somit des Drahtgewindeeinsatzes 1, um beispielsweise ein Positionieren des Drahtgewindeeinsatzes 1 zu unterstützen. Ein entsprechender Drahtgewindeeinsatz 1 ohne Befestigungsflansch 40 ist in Figur 3 dargestellt. Die letzte Wicklung 30 an einem oder beiden Enden der zylindrischen Spirale 20 ist plan ausgebildet, so dass die Anlagefläche 36 vorliegt. Während der Herstellung des Drahtgewindeeinsatzes 1 wird die Anlagefläche 36 durch Abschleifen einzelner Drahtgewindeeinsätze 1 oder durch Trennschleifen eines Endlos-Drahtgewindeeinsatzes 3 erzeugt (S5, vgl. Figur 7).

Zur bevorzugten Befestigung des Drahtgewindeeinsatzes 1 im Bauteilmaterial umfasst die radiale Außenwand 24 der zylindrischen Spirale 20 mindestens eine in Längsrichtung der zylindrischen Spirale 20 verlaufende Nut 26. Vorzugsweise ist eine Mehrzahl von derartigen Nuten 26 an der radialen Außenseite 24 vorgesehen. Beispielgebend ist eine derartige Nut 26 in Figur 6 veranschaulicht. Bei der Bauteilherstellung mit einformbarem Drahtgewindeeinsatz 1 dringt das Bauteilmaterial in die Nut 26 ein und bildet auf diese Weise einen Hinterschnitt, der den Drahtgewindeeinsatz gegen mögliches Verdrehen stabilisiert. Für die Nut 26 sind beliebige Formen denkbar, die diese Funktion erfüllen. Daher ist die Nut beispielsweise eckig, gekerbt oder ähnlich geformt. Gemäß Figur 6 verläuft die Nut 26 geradlinig in axialer Richtung der Spirale 20. Es ist ebenfalls bevorzugt hier einen krummlinigen Verlauf der Nut 26 vorzusehen. Zudem kann die Nut 26 in einer unterbrochenen Linie verlaufen oder aus seitlich zueinander versetzten Segmenten bestehen.

In Abhängigkeit vom Bauteilmaterial ist der Querschnitt 50 des Drahts 10 bzw. der Wicklungen 30 der zylindrischen Spirale 20 symmetrisch (siehe Figur 5) oder asymmetrisch geformt (vgl. Figuren 3 und 4). Bei einem symmetrischen Querschnitt 50 weisen der Gewindebereich 52 und der Verankerungsbereich 54 die gleiche Form auf. Bei einem asymmetrischen Querschnitt 50 sind die Formen von Gewindebereich 52 und Verankerungsbereich 54 verschieden. Bevorzugt ist der Verankerungsbereich 54 spitzwinkelig ausgebildet, so dass der Verankerungsbereich 54 möglichst weit in das Bauteilmaterial hinein ragt. Auf diese Weise bildet der Drahtgewindeeinsatz 1 einen im Vergleich zum symmetrischen Querschnitt 50 der Wicklungen 30 größeren Schubzylinder, wodurch die Auszugsfestigkeit des Drahtgewindeeinsatzes aus dem Bauteilmaterial gesteigert wird. Zur Realisierung dieses Vorteils schließen die beiden Flanken des Verankerungsbereichs 54 bevorzugt einen Winkel α < 60° ein. In diesem Zusammenhang ist es weiter bevorzugt, dass der Winkel α eine Größe von 30° bis 40° aufweist.

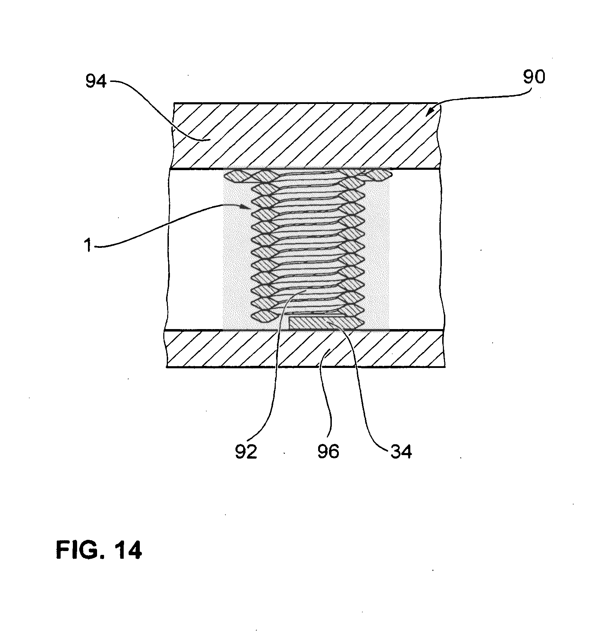

Gemäß einer weiteren bevorzugten Ausführungsform umfasst der Drahtgewindeeinsatz 1 an seinem dem Befestigungsflansch 40 abgewandten Ende einen radial in die Spirale 20 hinein ragenden Zapfen 34, wie er in Figur 9 dargestellt ist. Der Zapfen 34 dient bei der Herstellung des Bauteils bevorzugt als Tiefenanschlag des Drahtgewindeeinsatzes 1 am Stift 92 der Form 90 (vgl. Fig. 14). Dabei wird der Drahtgewindeeinsatz 1 auf den Stift 92 aufgesteckt und hält auf Grund des Zapfens 34 seine Position auf dem Stift 92 und somit in der Form 90. Zudem wird der Zapfen 34 beim Füllen der Form 90 mit Bauteilmaterial (Schritt D) umschlossen. Nach Aushärten des Bauteilmaterials trägt der umschlossene Zapfen 34 zur weiteren Stabilisierung und Befestigung des Drahtgewindeeinsatzes 1 im Bauteil bei.

Es ist ebenfalls bevorzugt, auf den Zapfen 34 zu verzichten oder den Zapfen 34 nach dem Einformen des Drahtgewindeeinsatzes 1 in ein Bauteil zu entfernen, so dass der Drahtgewindeeinsatz 1 an seinem dem Befestigungsflansch 40 abgewandten Ende eine freie Durchgangsöffnung aufweist. Diese freie Durchgangsöffnung ist von Bedeutung, wenn der Drahtgewindeeinsatz 1 eine Durchgangsbohrung im Bauteil verstärkt. In diesem Fall kann eine Schraube zum Befestigen eines Anbauteils nach dem Einschrauben in die Durchgangsbohrung an der Durchgangsöffnung des Drahtgewindeeinsatzes 1 heraus ragen.

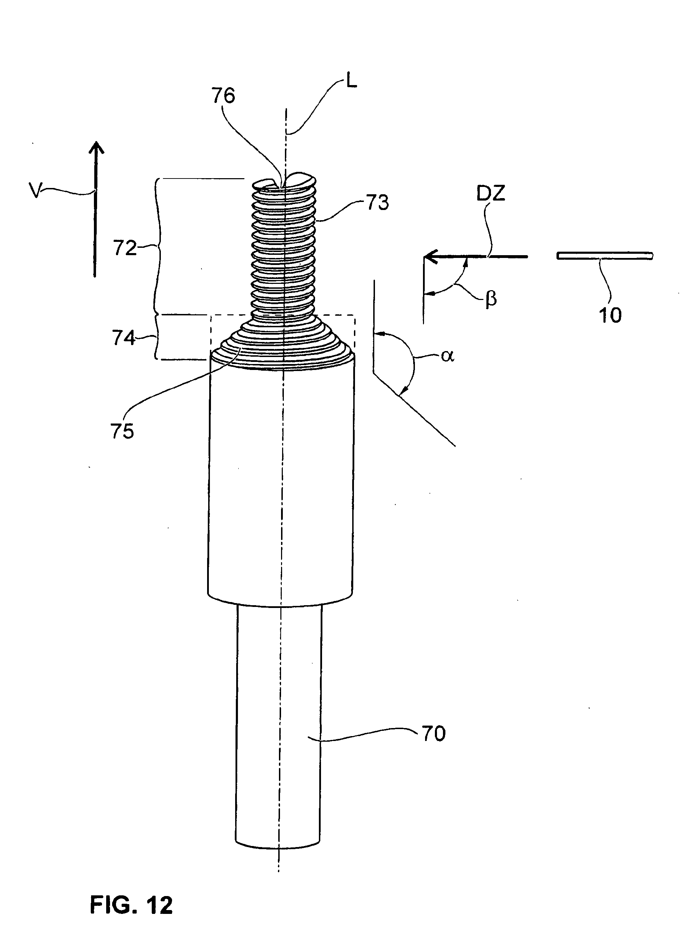

Zur Herstellung des Drahtgewindeeinsatzes wird bevorzugt eine Wickelspindel 70 genutzt, wie sie in Fig. 12 dargestellt ist. Die Wickelspindel 12 umfasst einen ersten zylindrischen Bereich 72 sowie einen zweiten im Vergleich zum zylindrischen Bereich 72 radial aufgeweiteten Bereich 74. Gemäß Fig. 12 weist bevorzugt das dem zweiten aufgeweiteten Bereich 74 abgewandte Ende des ersten Bereichs 72 eine Kerbe 76 auf. Diese Kerbe 76 dient der Aufnahme des Endes des zu wickelnden Drahts 10, um den bereits oben erwähnten radial nach innen ragenden Zapfen 34 zu bilden.

Innerhalb des zweiten Bereichs 74 weitet sich die Wickelspindel 70 aus dem ersten Bereich 72 radial nach außen auf. Diese Aufweitung erfolgt bevorzugt entlang einer Fläche kontinuierlich oder stufenförmig. Fig. 12 zeigt eine stufenförmige Aufweitung, bei der in den zweiten aufgeweiteten Bereich 74 ebenfalls gewindeähnliche Vertiefungen eingearbeitet sind. Der aufgeweitete Bereich 74 weist eine Außenfläche ähnlich der Mantelfläche eines Kegels auf, die in einem bestimmten Winkel α zur Längsachse L der Wickelspindel angeordnet ist. Der Winkel α nimmt Werte im Bereich von 90° bis 140°, vorzugsweise 100° bis 120° ein. Gemäß einer bevorzugten Ausführungsform ist der Winkel α=90°. In diesem Fall wird der zweite Bereich 74 durch einen Absatz im Vergleich zum ersten zylindrischen Bereich 72 gebildet, der durch die gestrichelte Linie in Fig. 12 in seiner Form angedeutet ist.

Zur Herstellung des Befestigungsflansches 40 ist ein Winkel α > 90° bevorzugt, um den zweiten aufgeweiteten Bereich 74 der Wickelspindel 70 bereitzustellen. Während der Herstellung des einformbaren Drahtgewindeeinsatzes 1 wird der Draht 10 vorzugsweise senkrecht zur Längsachse L in Richtung der Drahtzufuhrrichtung DZ (vgl. Fig. 12) der Wickelspindel 70 zugeführt. In dem in Fig. 12 schematisch dargestellten Fall wird der Draht 10 in einem Winkel β = 90° zur Längsachse L der Wickelspindel 70 zugeführt. Es ist ebenfalls bevorzugt, zwischen der Drahtzufuhrrichtung DZ und der Längsachse L der Wickelspindel in Wickelrichtung des Drahtgewindeeinsatzes 1 - also vom ersten Bereich 72 zum zweiten Bereich 74 - einen Winkel β größer oder kleiner 90° einzuschließen. Mit Hilfe dieser Ausrichtung der Zufuhrrichtung DZ zur Längsachse L der Wickelspindel 70 wird gewährleistet, dass beim Wickeln des einformbaren Drahtgewindeeinsatzes 1 gezielt mechanische Spannungen in den Draht 10 des Drahtgewindeeinsatzes 1 eingeformt bzw. eingeprägt werden.

Während des Wickelns des einformbaren Drahtgewindeeinsatzes 1 wird die Wickelspindel 70 in Vorschubrichtung V (vgl. Pfeil in Fig. 12) relativ zum Draht 10 bzw. dessen Zufuhrposition in Drahtzufuhrrichtung DZ versetzt. Es ist ebenfalls denkbar, dass nur der Draht 10 relativ zur Längsachse L der Wickelspindel 70 versetzt wird oder dass sowohl die Wickelspindel 70 wie auch der Draht 10 gleichzeitig relativ zueinander versetzt werden, um den einformbaren Drahtgewindeeinsatz 1 zu wickeln.

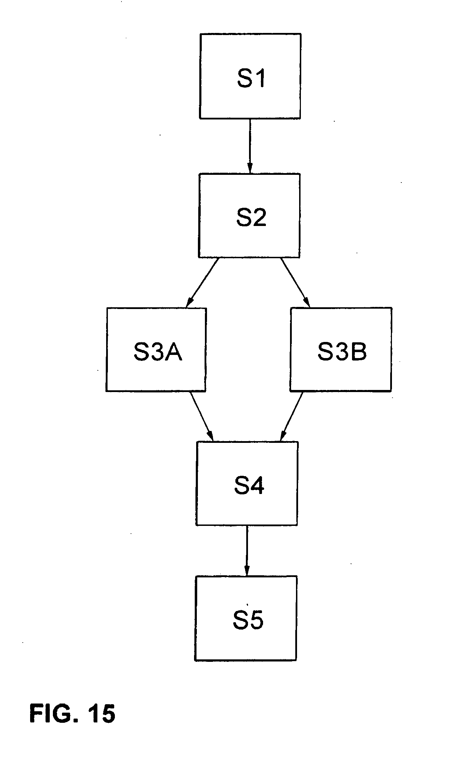

Eine bevorzugte Ausführungsform der Herstellung des Drahtgewindeeinsatzes 1 ist im Flussdiagramm der Figur 15 veranschaulicht. Der Draht besteht dabei bevorzugt aus einer Leichtmetalllegierung oder Stahl oder Edelstahl oder Kupfer oder Messing. Während Metalle mit Korrosionsschutz bevorzugt sind, ist es ebenfalls denkbar, nicht korrosionsgeschützte Metalle einzusetzen. Zudem können zunächst auch Drähte 10 ohne Korrosionsschutz verwendet werden, auf die nach dem Wickeln ein Korrosionsschutz aufgebracht wird.

Der einformbare Drahtgewindeeinsatz 1 wird vorzugsweise mit Hilfe der bereits oben beschriebenen Wickelspindel 70 (vgl. Fig. 12) hergestellt. In einem ersten bevorzugten Schritt S1 wird der endlose Draht 10 in der Kerbe 76 der Wickelspindel 70 befestigt, um den radial nach innen stehenden Zapfen 34 zu bilden. Danach beginnt das Wickeln des Drahts 10 zur zylindrischen Spirale 20 entlang des ersten zylindrischen Bereichs 72 der Wickelspindel 70 (Schritt S2). Zu diesem Zweck umfasst der erste zylindrische Bereich 72 der Wickelspindel 70 ein Gewinde, das im Wesentlichen die spätere Form des Innengewindes des einformbaren Drahtgewindeeinsatzes 1 vorgibt. Die zylindrische Spirale 20 wird auf dem ersten zylindrischen Bereich 72 mit einem bestimmten Durchmesser entsprechend dem geplanten Gewinde des Drahtgewindeeinsatzes 1 geformt. Neben dem Durchmesser weisen die Wicklungen 30 der zylindrischen Spirale 20 ebenfalls eine erste Steigung auf, die durch das Gewinde auf dem ersten zylindrischen Bereich 72 vorgegeben ist.

Nachdem die zylindrische Spirale 20 auf den ersten zylindrischen Bereich 72 gewickelt worden ist, wird der Draht 10 auf oder gegen den zweiten aufgeweiteten Bereich 74 der Wickelspindel 70 gewickelt. Auf diese Weise wird der radial auswärts über die Spiralwand 22, 24 hinaus stehende Befestigungsflansch 40 an einem Ende der Spirale 20 erzeugt (Schritt S3A). Alternativ zum Erzeugen eines Befestigungsflansches ist es ebenfalls bevorzugt, die zylindrische Spirale 20 an mindestens einem Ende planzuschleifen, vorzugsweise indem die zylindrische Spirale durch Trennschleifen in mindestens zwei Teile geteilt wird (Schritt S3B). Diese Verfahrensführung ist unten näher erläutert.

Gemäß einer ersten Ausführungsform wird der Befestigungsflansch 40 mit Hilfe der Wickelspindel 70 hergestellt, die den zweiten aufgeweiteten Bereich 74 in der in Fig. 12 dargestellten Form aufweist. Der Draht 10 wird auf den zweiten Bereich 74 gewickelt, um die Wicklungen 42 des Befestigungsflansches 40 zu bilden. Verglichen mit den Wicklungen 30 der zylindrischen Spirale 20 weist die mindestens eine Wicklung 42 des Befestigungsflansches 40 gewickelt auf den Bereich 74 eine geringere Steigung und einen größeren Durchmesser auf. Bevorzugt wird der Draht 10 derart auf den zweiten aufgeweiteten Bereich 74 der Wickelspindel 70 gewickelt, dass nach einem Abschneiden des Drahts 30 vom gewickelten Drahtgewindeeinsatz 1, vorzugsweise durch einen Stanzprozess, und dem Abspindeln (Schritt S5) des Drahtgewindeeinsatzes 1 von der Wickelspindel 70 das Ende der Spirale 20 den oben beschriebenen Befestigungsflansch 40 aufweist. Der Befestigungsflansch 40 umfasst mindestens eine sich in radialer Richtung über die zylindrische Spirale 20 hinaus erstreckende Wicklung 42, die entlang eines Umfangssegments mit einem Winkel γ verläuft. Bevorzugt umfasst der Befestigungsflansch 40 zwei in radialer Richtung übereinander liegende Wicklungen 42. Es ist weiterhin bevorzugt, dass sich die radial äußere Wicklung 42 des Befestigungsflansches 40 entlang eines Umfangssegments mit dem Winkel γ < 360° anschließend an die erste Wicklung 42 des Befestigungsflansches 40 erstreckt. Es ist zudem bevorzugt, eine oder zwei Wicklungen 42 des Befestigungsflansches 40 zu erzeugen, die sich über ein bestimmtes Umfangssegment erstrecken, wie es oben beschrieben worden ist.

Um den Drahtgewindeeinsatz 1 zu wickeln, wird die Wickelspindel 70 vorzugsweise in Vorschubrichtung V versetzt (vgl. Fig. 12). Währenddessen bleibt die Zufuhrposition des Drahts 10 mit Zufuhrrichtung DZ konstant. Der Vorschub oder Versatz V der Wickelspindel 70 wird in Abhängigkeit von der Steigung des zu wickelnden Gewinde auf dem zylindrischen Bereich 72 eingestellt.

Während des Wickelns des Drahtgewindeeinsatzes 1 wird der Draht 10 bevorzugt in einem Winkel β zur Längsachse L der Wickelspindel 70 zugeführt (vgl. Fig. 12). Der Winkel β wird durch die Drahtzufuhrrichtung DZ und die Längsachse L der Wickelspindel 70 in Wickelrichtung des Drahtgewindeeinsatzes - also entgegen der Vorschubrichtung V der Wickelspindel 70 - gebildet. Vorzugsweise ist der Winkel β ≥ 90°, um mechanische Spannungen in den Draht 10 des Drahtgewindeeinsatzes einzuprägen. Diese mechanischen Spannungen im Draht 10 des Drahtgewindeeinsatzes 1 sorgen nach dem Abspindeln des Drahtgewindeeinsatzes 1 von der Wickelspindel 70 dafür, dass benachbarte Wicklungen 30, 42 aneinander anliegen. Auf diese Weise wird ein auf Block gewickelter Drahtgewindeeinsatz 1 bereitgestellt, deren Inneres gegen ein Eindringen von beispielsweise Kunststoff von außen beim Herstellen eines Bauteils und Einformen des Drahtgewindeeinsatzes abgedichtet ist.

Zudem wird bevorzugt der Draht 10 beim Wickeln des Drahtgewindeeinsatzes 1 mit einer Zugspannung in seiner Längsrichtung beaufschlagt, so dass Verformungen des Drahts 10 außerhalb des elastischen Bereichs erzeugt werden. Diese Vorgehensweise stellt sicher, dass nach dem Abspindeln des Drahtgewindeeinsatzes von der Wickelspindel 70 ebenfalls ein auf Block gewickelter einformbarer Drahtgewindeeinsatz 1 vorliegt.

Die zylindrische Spirale 20 des fertiggestellten Drahtgewindeeinsatzes 1 soll ein Innengewinde mit einer Nennsteigung bereitstellen. Um dies zu erzielen, ist bevorzugt das Gewinde 73 des ersten Bereichs 72 der Wickelspindel 70 mit einer Übersteigung ausgebildet. Übersteigung bedeutet in diesem Fall, dass die Steigung des Gewindes 73 größer ist als die Nennsteigung des Innengewindes der späteren zylindrischen Spirale 20. Geht man bezogen auf Figur 12 von einer konstanten vertikalen Zufuhrposition des Drahts 10 beim Wickeln der zylindrischen Spirale 20 auf dem Gewinde 73 aus, wird während des Wickelns der zylindrischen Spirale 20 die Wickelspindel 70 um einen bestimmten Betrag in axialer Vorschubrichtung V pro Umdrehung versetzt. Entspricht das Gewinde 73 in seiner Steigung der Nennsteigung der späteren zylindrischen Spirale 20, wird die Wickelspindel 70 bevorzugt mit der Nennsteigung in Vorschubrichtung V pro Umdrehung der Wickelspindel versetzt.

Gemäß einer anderen bevorzugten Alternative, bei der das Gewinde 73 die oben diskutierte Übersteigung aufweist, wird die Wickelspindel 70 bei konstanter Drahtzufuhrposition in Vorschubrichtung V um einen Betrag kleiner als die Übersteigung des Gewindes 73 pro Umdrehung versetzt. Dieser Betrag entspricht beispielsweise der Nennsteigung des Gewindes der späteren zylindrischen Spirale 20. Aufgrund dieses Vorschubs bzw. Versatzes der Wickelspindel 70 in axialer Richtung pro Umdrehung wird der Draht 10 in einem Winkel β > 90° (vgl. Fig. 12) dem ersten Bereich 72 der Wickelspindel 70 zugeführt. Diese kombinierte Zwangsführung des Drahts 10 durch das Gewinde 73, den axialen Vorschub der Wickelspindel 70 und den sich ergebenden Winkel β prägt die oben beschriebene innere mechanische Spannung in den einformbaren Drahtgewindeeinsatz 1 ein.

Die eine oder mehreren Wicklungen 42 des Befestigungsflansches 40 werden bevorzugt mit Hilfe des zweiten Bereichs 74 der Wickelspindel 70 erzeugt, der das Gewinde 75 aufweist. Gemäß einer bevorzugten Verfahrensführung ist das Gewinde 75 mit einer Untersteigung im Vergleich zur Nennsteigung des Innengewindes der späteren zylindrischen Spirale 20 ausgebildet. Untersteigung bedeutet in diesem Zusammenhang, dass die Steigung des Gewindes 75 kleiner ist als die Nennsteigung der zylindrischen Spirale 20. Wird der Draht 10 bei konstanter Zuführposition in Zuführrichtung DZ auf den zweiten Bereich 74 der Wickelspindel 70 gewickelt, wird die Wickelspindel 70 um einen bestimmten Betrag in Vorschubrichtung pro Umdrehung versetzt. Dieser Betrag ist vorzugsweise kleiner als die Untersteigung des Gewindes 75, so dass in ähnlicher Weise, wie es oben beschrieben worden ist, mechanische Spannungen in den Drahtgewindeeinsatz 1 eingeprägt werden. Diese eingeprägte mechanische Spannung sorgen dafür, dass sich die eine oder mehreren Wicklungen 42 des Befestigungsflansches 40 nach der Fertigstellung des Drahtgewindeeinsatzes 1 in annähernd einer Ebene am Ende der zylindrischen Spirale 20 anordnen.

Es ist ebenfalls denkbar, die Zuführposition des Drahts 10 bezogen auf die Wickelspindel 70 in Vorschubrichtung V zu verändern, während die Wickelspindel 70 ihre axiale Position beibehält.

Nach einer weiteren bevorzugten Alternative vorliegenden Herstellungsverfahrens ist der zweite Bereich 74 der Wickelspindel 70 ein Absatz, gegen den der Draht 10 gewickelt wird. Sobald der Draht 10 gegen den Absatz 74 (vgl. Fig. 12) gewickelt wird, ordnen sich die Wicklungen 42 des Befestigungsflansches 40 mit teilweiser Überlappung radial nebeneinander an, um den Befestigungsflansch 40 zu bilden.

Es ist weiterhin bevorzugt, nach dem Wickeln des Drahts 10 auf die Wickelspindel 70 mindestens eine in Axialrichtung verlaufende Nut 26 an einer radialen Außenseite der Spirale 20 zu erzeugen. Dies wird gemäß einer Alternative mittels Fräsen realisiert.

Abschließend wird der Drahtgewindeeinsatz 1 von der Wickelspindel 70 abgespindelt (S5). Nach dem Abspindeln liegen benachbarte Wicklungen 30, 42 derart aneinander an, dass ein auf Block gewickelter Drahtgewindeeinsatz 1 vorliegt. Auf diese Weise wird an der Innenseite des Drahtgewindeeinsatzes 1 vorzugsweise ein Regelgewinde gebildet, das nach außen hin abgedichtet ist. Es ist ebenfalls bevorzugt, an der Innenseite ein Sondergewinde, wie beispielsweise ein Feingewinde, ein Trapezgewinde, ein Grobgewinde oder ähnliches, zu bilden.

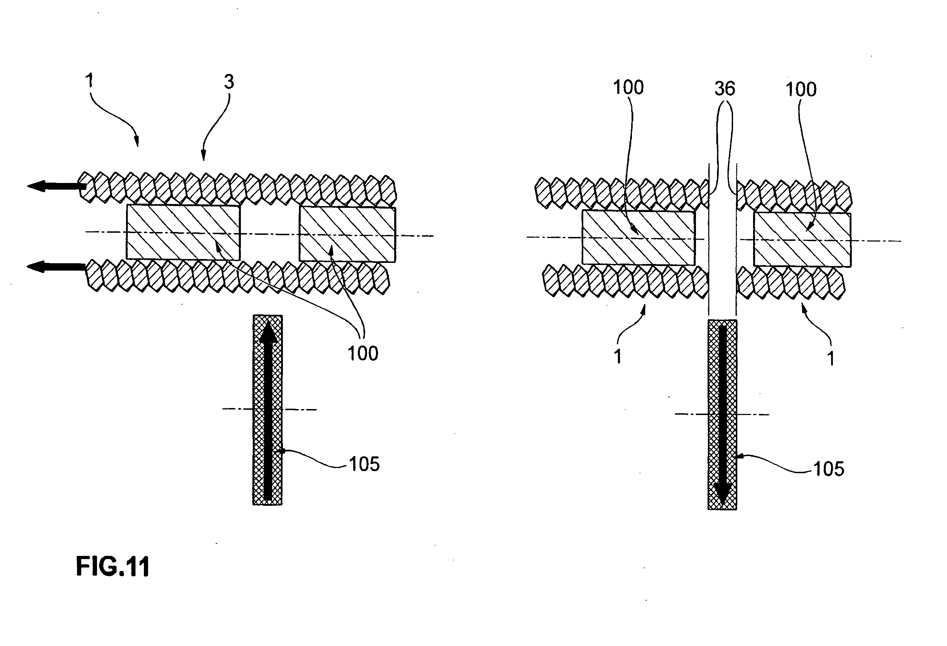

Gemäß einer anderen Alternative wird an Stelle oder ergänzend zum Befestigungsflansch 40 ein Ende der zylindrischen Spule 20 plan geschliffen (vgl. Schritt S3B). Um dies zu realisieren, wird gemäß einer Herstellungsroute zunächst ein Endlos-Drahtgewindeeinsatz 3 auf einem Dorn 100 gewickelt (vgl. Figur 11). Der Dorn 100 ist beispielsweise zweiteilig ausgebildet, so dass ein Durchgang zwischen den beiden benachbarten Teilen des Doms 100 gebildet werden kann. Eine Trennscheibe 105 wird nachfolgend durch den Durchbruch der beiden Dornteile 100 bewegt und trennt auf diese Weise in Pfeilrichtung der linken Darstellung in Figur 7 den Drahtgewindeeinsatz 3 in zwei Teile. Nachdem gemäß Figur 7 rechte Darstellung die Trennscheibe 105 in ihre Ausgangsposition zurückgekehrt ist (siehe Pfeil), liegen zwei Drahtgewindeeinsätze 1 mit jeweils plan ausgebildetem Ende 36 vor.

Das Herstellungsverfahren zum Herstellen eines Bauteils mit eingeformtem Drahtgewindeeinsatz 1 wird Bezug nehmend auf das Flussdiagramm in Figur 11 und die Darstellung in den Figuren 8 und 9 näher erläutert. Das Bauteil (nicht gezeigt) wird beispielsweise aus Kunststoff durch Spritzgießen oder aus Metall durch ein geeignetes Gussverfahren hergestellt. Es sind ebenfalls auch andere Herstellungsverfahren für ein Bauteil geeignet, mit denen der Drahtgewindeeinsatz 1 einformbar ist.

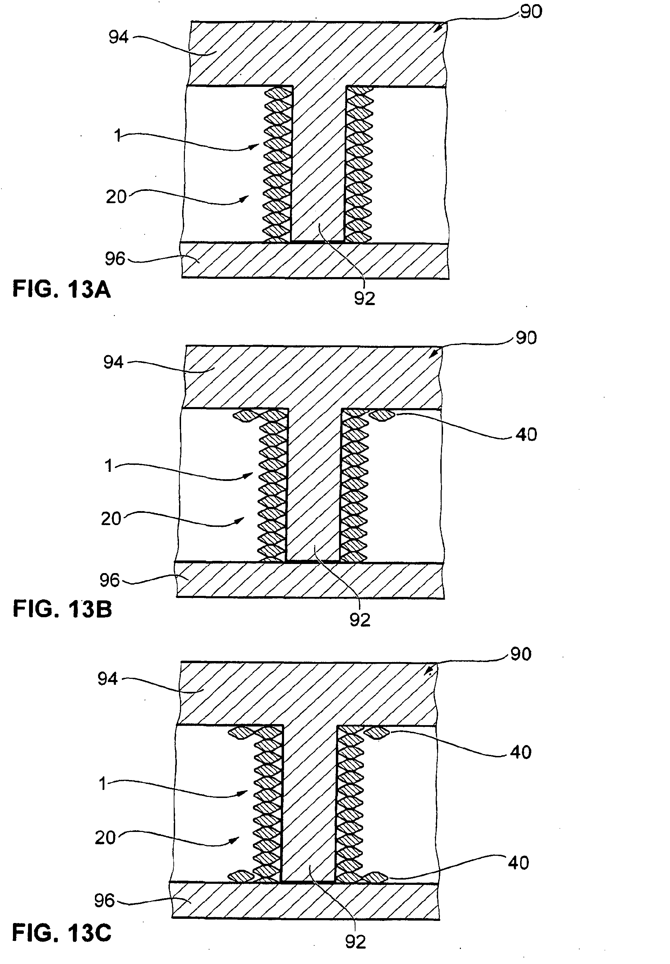

Beispielgebend ist in den Figuren 13 und 14 eine Form 90 bestehend aus den beiden Formhälften 94 und 96 zur Herstellung eines Bauteils mit eingeformtem Drahtgewindeeinsatz 1 dargestellt. Die Formhälfte 94 umfasst den Stift 92, auf dem der Drahtgewindeeinsatz 1 positioniert wird (Schritte A, B). Gemäß einer ersten bevorzugten Alternative wird der Drahtgewindeeinsatz 1 auf den Stift 92 aufgesteckt und gleitet auf der Oberfläche des Stifts 92, bis er an einer Anschlagfläche anliegt. Zu diesem Zweck weist der Stift 92 kein Gewinde auf (Schritt B). Gemäß einer weiteren Alternative wird der Drahtgewindeeinsatz 1 auf den Stift 92 aufgeschraubt oder aufgespindelt, da dieser an seiner Außenseite ein zum Innengewinde des Drahtgewindeeinsatzes 1 passendes Außengewinde aufweist (Schritt A).

In Figur 13 ist veranschaulicht, dass der Drahtgewindeeinsatz 1 eine Durchgangsöffnung im Bauteil verstärken soll. Nachdem das Bauteilmaterial in die Form 90 eingebracht worden ist, so dass es die Hohlräume zwischen den Formhälften 94 und 96 ausfüllt, härtet das Bauteilmaterial aus. Nach dem Schritt des Füllens der Form (D) und des Aushärtens des Bauteilmaterials wird das Bauteil im Schritt E aus der Form 90 ausgeformt.

In der in Figur 14 dargestellten Herstellungsalternative stützt sich der Drahtgewindeeinsatz 1 über den Zapfen 34 am Stift 92 der Form 90 ab. Nach Füllen der Form 90 mit beispielsweise Metall oder Kunststoff härtet das Bauteilmaterial aus, so dass der Drahtgewindeeinsatz 1 eine einseitig geschlossene Öffnung im Bauteil verstärkt.

In den Figuren 13 und 14 ist ebenfalls erkennbar, dass entweder die Anlagefläche 36 oder der Befestigungsflansch 40 gewährleistet, dass einerseits der Drahtgewindeeinsatz 1 angrenzend an einer Bauteiloberfläche endet, der Drahtgewindeeinsatz 1 in der Form 90 präzise positioniert ist und zudem angrenzend an die Formhälfte 94 ein zusätzliches Abdichten des Inneren des Drahtgewindeeinsatzes 1 erfolgt.

## Patentansprüche

1. Einformbarer Drahtgewindeeinsatz (1) zur Verstärkung einer Einschrauböffnung eines Bauteils, der die folgenden Merkmale aufweist:
a. eine aus einem wendelförmig gewickelten Draht (10) gebildete zylindrische Spirale (20), deren
b. benachbarte Wicklungen (30) derart angeordnet sind, dass eine geschlossene zylindrische Spiralwand (22, 24) vorliegt, während
c. mindestens ein Ende der zylindrischen Spirale (20) einen Befestigungsflansch (40) aufweist, der sich radial auswärts über die zylindrische Spiralwand (22, 24) hinaus erstreckt und mit dem der Drahtgewindeeinsatz (1) im Bauteil verankerbar ist, wobei
der Befestigungsflansch (40) mindestens eine Flanschwicklung (42) des gewickelten Drahts (10) umfasst, die im Vergleich zur zylindrischen Spirale (20) eine reduzierte, vorzugsweise keine, Steigung aufweist.

2. Drahtgewindeeinsatz (1) gemäß Anspruch 1, der eine erste Wicklung (42) umfasst, die sich entlang eines Umfangssegments des Befestigungsflansches (40) beginnend am Ende (28) der zylindrischen Spirale (20) über einen Winkel γ von mindestens 180°, vorzugsweise 180° bis 270° und weiter bevorzugt von 180° bis 360°, erstreckt.

3. Drahtgewindeeinsatz (1) gemäß Anspruch 2, der eine vollständige erste Wicklung (42) und eine zweite Wicklung (42) umfasst, die sich entlang eines Umfangssegments des Befestigungsflansches (40) beginnend am Ende (29) der ersten Wicklung (42) über einen Winkel γ von mindestens 180°, vorzugsweise 180° bis 270° und weiter bevorzugt von 180° bis 360°, erstreckt.

4. Drahtgewindeeinsatz (1) gemäß Anspruch 1, dessen Befestigungsflansch (40) mindestens zwei in radialer Richtung der zylindrischen Spirale (20) übereinanderliegende Wicklungen (42) des gewickelten Drahts (10) umfasst, wobei die radial äußere Wicklung (42) des Befestigungsflansches (40) mindestens teilweise, insbesondere vollständig, um die Spirale (20) umlaufend ausgebildet ist.

5. Drahtgewindeeinsatz (1) gemäß einem der vorhergehenden Ansprüche, dessen zylindrische Spiralwand (22, 24) an einer radialen Außenseite (24) mindestens eine in Längsrichtung der zylindrischen Spirale (20) verlaufende Nut (26), vorzugsweise eine Mehrzahl von Nuten (26) aufweist.

6. Drahtgewindeeinsatz (1) gemäß Anspruch 1, dessen Draht (10) einen derart geformten Querschnitt (50) besitzt, dass die geschlossene zylindrische Spiralwand (22, 24) an einer radialen Innenseite (22) ein Standardgewinde, vorzugsweise ein metrisches oder zölliges Innengewinde, aufweist.

7. Drahtgewindeeinsatz (1) gemäß Anspruch 1, in dem ein Querschnittsprofil (50) des Drahts radial auswärts bezogen auf die zylindrische Spirale (20) eine Winkelkontur (54) mit zwei Flanken aufweist, die einen Winkel α < 60°, vorzugsweise einen Winkel zwischen 30° und 40°, einschließen.

8. Drahtgewindeeinsatz (1) gemäß Anspruch 7, dessen Querschnitt (50) des Drahts asymmetrisch bezogen auf eine radiale Innen- (22) und Außenseite (24) der Spiralwand (20) ausgebildet ist.

9. Drahtgewindeeinsatz (1) gemäß Anspruch 1, dessen Ende der Spirale (20) gegenüber dem Ende mit Befestigungsflansch (40) einen radial einwärts ragenden Zapfen (34) oder eine freie Durchgangsöffnung aufweist.

10. Drahtgewindeeinsatz (1) gemäß Anspruch 1, in dem ein Querschnitt (50) des Drahts (10) in axialer Richtung der Spirale (20) Stirnflächen (56) aufweist, so dass Stirnflächen (56) benachbarter Wicklungen (30) aneinander anliegen.

11. Drahtgewindeeinsatz (1) gemäß Anspruch 10, dessen Stirnflächen (56) benachbarter Wicklungen (30) komplementär zueinander geformt sind.

12. Drahtgewindeeinsatz (1) gemäß einem der vorhergehenden Ansprüche, der aus einer Leichtmetalllegierung oder Stahl oder Edelstahl oder Kupfer oder Messing besteht.

13. Bauteil bestehend aus Kunststoff oder Metall, in dem ein Drahtgewindeeinsatz (1) gemäß einem der Ansprüche 1 bis 12 eingeformt ist.

14. Herstellungsverfahren eines einformbaren Drahtgewindeeinsatzes (1) zur Verstärkung einer Einschrauböffnung eines Bauteils, das die folgenden Schritte aufweist:
a. Wickeln eines Drahts (10) zu einer zylindrischen Spirale (20) (S2) mit einem Durchmesser derart, dass benachbarte Wicklungen (30) der zylindrischen Spirale (20) eine erste Steigung aufweisen und eine zylindrische Spiralwand (22, 24) bilden,
b. Erzeugen eines radial auswärts über die Spiralwand (22, 24) hinaus stehenden Befestigungsflansches (40) an mindestens einem Ende der Spirale (20) (S3A) durch Wickeln von mindestens einer Wicklung (30) der Spirale (20) an einem Ende der Spirale (20) (S2A) mit einer gegenüber der ersten Steigung reduzierten Steigung, um den Befestigungsflansch (40) zu bilden.

15. Herstellungsverfahren gemäß Anspruch 14, das weiterhin umfasst:
Wickeln des Befestigungsflansches (40) derart, dass der Befestigungsflansch (40) einen größeren Durchmesser aufweist als die Spirale (20), insbesondere indem das Ende der Spirale (20) mindestens zwei in radialer Richtung der zylindrischen Spirale (20) übereinanderliegende Wicklungen (42) (30) des gewickelten Drahts (10) umfasst.

16. Herstellungsverfahren gemäß Anspruch 14 mit dem weiteren Schritt:
Wickeln des Drahts (10) auf eine Wickelspindel (70), wobei die Wickelspindel (70) einen ersten zylindrischen Bereich (72) zum Wickeln der zylindrischen Spirale (20) und einen im Vergleich zum ersten zylindrischen Bereich (72) zweiten in radialer Richtung aufgeweiteten Bereich (74) zum Wickeln des Befestigungsflansches (40) umfasst.

17. Herstellungsverfahren gemäß Anspruch 16 mit dem weiteren Schritt:
Wickeln des Befestigungsflansches (40) derart, dass der Draht (10) auf den zweiten aufgeweiteten Bereich (74) der Wickelspindel (70) aufgewickelt wird, der sich stetig oder stufenförmig aufweitet, oder dass der Draht (10) gegen den zweiten aufgeweiteten Bereich (74) gewickelt wird, der einen Absatz im Vergleich zum ersten zylindrischen Bereich (72) darstellt.

18. Herstellungsverfahren gemäß Anspruch 16 oder 17 mit dem weiteren Schritt:
Wickeln des Drahts (10) auf die Wickelspindel (70) derart, dass eine Längsachse (L) der Wickelspindel (70) in Wickelrichtung des Drahtgewindeeinsatzes (1) und eine Drahtzufuhrrichtung (DZ) des zu wickelnden Drahts (10) einen Winkel β ≥90° einschließen.

19. Herstellungsverfahren gemäß einem der Ansprüche 16 bis 18 mit dem weiteren Schritt:
Versetzen der Wickelspindel (70) und des zuzuführenden Drahts (10) relativ zueinander mit unterschiedlicher Geschwindigkeit während des Wickelns des Drahts (10) auf den ersten (72) und den zweiten Bereich (74) der Wickelspindel (70).

20. Herstellungsverfahren gemäß Anspruch 14 mit dem weiteren Schritt:
Abspindeln (S5) der zylindrischen Spirale (20) mit Befestigungsflansch (40) von einer Wickelspindel (70), so dass danach benachbarte Wicklungen (30) der Spirale (20) und vorzugsweise des Befestigungsflansches (40) abdichtend aneinander anliegen.

21. Herstellungsverfahren gemäß Anspruch 14 mit dem weiteren Schritt:
Einhaken (S1) des zu wickelnden Drahts (10) in eine Kerbe (76) der Wickelspindel (70) und Erzeugen eines radial einwärts stehenden Zapfens (34) am flanschabgewandten Ende der Spirale (20) durch Aufwickeln des Drahts (10) auf die Wickelspindel (70).

22. Herstellungsverfahren gemäß Anspruch 14 mit dem weiteren Schritt:
Erzeugen mindestens einer in axialer Richtung verlaufenden Nut (26) an einer radialen Außenseite (24) der Spirale (20) (S4), vorzugsweise mittels Fräsen.

23. Herstellungsverfahren eines Bauteils mit einem eingeformten Drahtgewindeeinsatz (1), der eine aus einem wendelförmig gewickelten Draht (10) gebildete zylindrische Spirale (20) aufweist, von der mindestens ein Ende einen Befestigungsflansch (40) umfasst, der sich radial auswärts über die zylindrische Spirale (20) hinaus erstreckt, insbesondere ein Drahtgewindeeinsatz (1) gemäß einem der Ansprüche 1 bis 12, wobei das Bauteil aus Kunststoff oder Metall besteht und das Verfahren die folgenden Schritte aufweist:
a. Positionieren (A, B) des Drahtgewindeeinsatzes (1) auf einem Stift (92),
b. Anordnen (C) des Stifts (92) mit Drahtgewindeeinsatz (1) in einer Form (90) derart, dass nach einem Ausformen des Bauteils der Befestigungsflansch (40) angrenzend an eine Bauteiloberfläche angeordnet ist,
c. Füllen (D) der Form (90) mit Metall oder Kunststoff und
d. Ausformen des Bauteils (E) mit Drahtgewindeeinsatz (1) aus der Form (90).

24. Herstellen eines Bauteils gemäß Anspruch 23, das in weiterer Ausgestaltung von Schritt a aufweist:
Aufspindeln (A) des Drahtgewindeeinsatzes (1) auf den Stift (92), der ein zum Drahtgewindeeinsatz (1) passendes Gewinde aufweist, oder
Aufstecken (B) des Drahtgewindeeinsatzes (1) auf einen Stift (92) ohne Gewinde.

25. Herstellen eines Bauteils gemäß Anspruch 23, das in weiterer Ausgestaltung von Schritt c aufweist:
Spritzgießen (D) von Kunststoff in der Form (90) zum Herstellen des Bauteils.

26. Wickelspindel (70) zum Wickeln eines einformbaren Drahtgewindeeinsatzes (1), die die folgenden Merkmale aufweist:
a. einen ersten zylindrischen Bereich (72) mit einem Gewinde und
b. einen zweiten Bereich (74), der in radialer Richtung verglichen zum ersten Bereich (72) aufgeweitet ist, so dass mit Hilfe des zweiten Bereichs (74) ein Befestigungsflansch (40) des einformbaren Drahtgewindeeinsatzes (1) herstellbar ist.

27. Wickelspindel (70) gemäß Anspruch 26, deren zweiter aufgeweiteter Bereich (74) stetig oder stufenförmig im Vergleich zum ersten Bereich (72) aufgeweitet ist.

28. Wickelspindel (70) gemäß Anspruch 26, deren zweiter aufgeweiteter Bereich (74) einstufig ausgebildet ist und einen Absatz im Vergleich zum ersten zylindrischen Bereich (72) darstellt.

29. Wickelspindel (70) gemäß Anspruch 26, die an einem Ende des ersten zylindrischen Bereichs (72) eine Kerbe (76) aufweist, in der ein zu wickelnder Draht (10) befestigbar ist, um beim Wickeln eines Drahtgewindeeinsatzes (1) einen radial nach innen stehenden Zapfen (34) zu bilden.

30. Wickelspindel (70) gemäß Anspruch 26, deren zweiter Bereich in einem Winkel von 90° bis 120° zur Längsachse der Wickelspindel (70) angeordnet ist.

## Claims

1. Moldable wire thread insert (1) for reinforcing a screw-in opening of a component, which has the following features:
a. a cylindrical spiral (20) made of a helically, wound wire (10),
b. the neighboring coils (30) of which are arranged such that a closed cylindrical spiral wall (22, 24) is present, while
c. at least one end of the cylindrical spiral (20) has a fastening flange (40), which extends radially outwards beyond the cylindrical spiral wall (22, 24) and with which the wire thread insert (1) is anchorable in the component, wherein the fastening flange (40) comprises at least one flange coil (42) of the wound wire (10), which has a reduced, preferably no, slope compared to the cylindrical spiral.

2. Wire thread insert (1) according to claim 1, which comprises a first coil (42), which extends along a circumferential segment of the fastening flange (40) starting at the end (28) of the cylindrical spiral (20) over an angle γ of at least 180°, preferably 180° to 270° and more preferably of 180° to 360°.

3. Wire thread insert (1) according to claim 2, which comprises a complete first coil (42) and a second coil (42), which extends along a circumferential segment of the fastening flange (40) starting at the end (29) of the first coil (42) over an angle γ of at least 180°, preferably 180° to 270° and more preferably of 180° to 360°.

4. Wire thread insert (1) according to claim 1, the fastening flange (40) of which comprises at least two coils (42) of the wound wire (10) lying above each other in the radial direction of the cylindrical spiral (20), wherein the radially outer coil (42) of the fastening flange (40) is formed circumferentially at least partially, in particular completely, around the spiral (20).

5. Wire thread insert (1) according to one of the previous claims, the cylindrical spiral wall (22, 24) of which has at least one groove (26) on a radial outside (24) extending in the longitudinal direction of the cylindrical spiral (20), preferably a plurality of grooves (26).

6. Wire thread insert (1) according to claim 1, the wire (10) of which has a cross-section (50) shaped such that the closed cylindrical spiral wall (22, 24) has a standard thread, preferably a metric or imperial internal thread, on a radial inside (22).

7. Wire thread insert (1) according to claim 1, in which a cross-sectional profile (50) of the wire radially outwards with respect to the cylindrical spiral (20) has an angle contour (54) with two flanks, which form an angle α < 60°, preferably an angle between 30° and 40°.

8. Wire thread insert (1) according to claim 7, the wire cross-section (50) of which is designed asymmetrically with respect to a radial inside (22) and outside (24) of the spiral wall (20).

9. Wire thread insert (1) according to claim 1, the end of the spiral (20) of which has a radial inwards protruding tang (34) or a free through hole opening opposite to the end having the fastening flange (40).

10. Wire thread insert (1) according to claim 1, in which a cross-section (50) of the wire (10) has front surfaces (56) in axial direction of the spiral (20) so that front surfaces (56) of neighboring coils (30) abut each other.

11. Wire thread insert (1) according to claim 10, the front surfaces (56) of neighboring coils (30) of which are shaped complementarily to each other.

12. Wire thread insert (1) according to one of the previous claims, which consists of a light metal alloy or steel or stainless steel or copper or brass.

13. Component made of plastic or metal, into which a wire thread insert (1) according to one of the claims 1 through 12 is molded.

14. Production method for a moldable wire thread insert (1) for reinforcing a screw-in opening of a component, which has the following steps:
a. winding a wire (10) to a cylindrical spiral (20) (S2) having a diameter such that neighboring coils (30) of the cylindrical spiral (20) have a first slope and form a cylindrical spiral wall (22, 24),
b. creating a fastening flange (40) protruding radially outwards beyond the spiral wall (22, 24) on at least one end of the spiral (20) (S3A) by winding at least one coil (30) of the spiral (20) on one end of the spiral (20) (S2A) with a reduced slope compared to the first slope, in order to form the fastening flange (40).

15. Production method according to claim 14, which further comprises:
winding the fastening flange (40) such that the fastening flange (40) has a greater diameter than the spiral (20), in particular in that the end of the spiral (20) comprises at least two coils (42) (30) of the wound wire (10) lying above each other in the radial direction of the cylindrical spiral (20).

16. Production method according to claim 14 with the further step:
winding the wire (10) onto a winding spindle (70), wherein the winding spindle (70) comprises a first cylindrical portion (72) for winding the cylindrical spiral (20) and a second portion (74) enlarged in the radial direction compared to the first cylindrical portion (72) for winding the fastening flange (40).

17. Production method according to claim 16 with the further step:
winding the fastening flange (40) such that the wire (10) is wound onto the second enlarged area (74) of the winding spindle (70), which is enlarged constantly or gradually, or such that the wire (10) is wound against the second enlarged area (74), which represents a shoulder compared to the first cylindrical area (72).

18. Production method according to claim 16 or 17 with the further step:
winding the wire (10) onto the winding spindle (70) such that a longitudinal axis (L) of the winding spindle (70) in the winding direction of the wire thread insert (1) and a wire feed direction (DZ) of the wire (10) to be wound enclose an angle β ≥ 90°.

19. Production method according to one of the claims 16 to 18 with the further step:
displacing the winding spindle (70) and the wire (10) to be fed relative to each other with different speeds during the winding of the wire (10) onto the first (72) and the second portion (74) of the winding spindle (70).

20. Production method according to claim 14 with the further step:
unspindling (S5) the cylindrical spiral (20) with fastening flange (40) from a winding spindle (70) so that neighboring windings (30) of the spiral (20) and preferably of the fastening flange (40) abut each other in a sealing manner.

21. Production method according to claim 14 with the further step:
hooking (S1) of the wire (10) to be wound into a notch (76) of the winding spindle (70) and creating a radially inwards protruding tang (34) at the end of the spiral (20) facing away from the flange by means of winding up the wire (10) onto the winding spindle (70).

22. Production method according to claim 14 with the further step:
creating at least one groove (26) extending in axial direction at a radial outside (24) of the spiral (20) (S4), preferably by means of milling.

23. Production method of a component having a molded wire thread insert (1), which has a cylindrical spiral (20) formed from a helically, wound wire (10), at least one end of which comprises a fastening flange (40), which extends radially outwards beyond the cylindrical spiral (20), in particular a wire thread insert (1) according to one of the claims 1 to 12, wherein the component is made of plastic or metal and the method has the following steps:
a. positioning (A, B) the wire thread insert (1) on a pin (92),
b. arranging (C) the pin (92) with wire thread insert (1) in a mold (90) such that, after a removing of the component from the mold, the fastening flange (40) is arranged adjacent to a component surface,
c. filling (D) of the mold (90) with metal or plastic and
d. removing the component (E) with wire thread insert (1) from the mold (90).

24. Producing a component according to claim 23, which comprises in a further embodiment of step a:
spindling (A) of the wire thread insert (1) onto the pin (92), which has a thread fitting to the wire thread insert (1), or
mounting (B) of the wire thread insert (1) onto a pin (92) without thread.

25. Producing a component according to claim 23, which comprises in a further embodiment of step c:
injection molding (D) of plastic in the mold (90) for producing the component.

26. Winding spindle (70) for winding a moldable wire thread insert (1), which has the following characteristics:
a. a first cylindrical portion (72) with a thread and
b. a second portion (74), which is enlarged in radial direction compared to the first portion (72) so that a fastening flange (40) of the moldable wire thread insert (1) is producible by means of the second portion (74).

27. Winding spindle (70) according to claim 26, the second enlarged portion (74) of which is constantly or gradually enlarged compared to the first portion (72).

28. Winding spindle (70) according to claim 26, the second enlarged area (74) of which is formed in a single step manner and represents a shoulder compared to the first cylindrical portion (72).

29. Winding spindle (70) according to claim 26, which has a notch (76) on one end of the first cylindrical portion (72), in which a wire (10) to be wound is fastenable in order to form a radially inward protruding tang (34) during the winding of the wire thread insert (1).

30. Winding spindle (70) according to claim 26, the second portion of which is arranged at an angle of 90° to 120° with respect to the longitudinal axis of the winding spindle (70).

## Revendications

1. Insert de filetage en fil métallique (1) conformable destiné à renforcer une ouverture de vissage d'un composant, qui présente les caractéristiques suivantes :
a. une spirale (20) cylindrique formée à partir d'un fil (10) enroulé en forme d'hélice, dont
b. des enroulements (30) voisins sont disposés de telle sorte qu'il existe une paroi en spirale (22, 24) cylindrique fermée, tandis
c. qu'au moins une extrémité de la spirale (20) cylindrique présente une bride de fixation (40) qui s'étend radialement vers l'extérieur au-delà de la paroi en spirale (22, 24) cylindrique et qui peut être ancrée avec l'insert de filetage en fil métallique (1) dans le composant, la bride de fixation (40) comprenant au moins un enroulement de bride (42) du fil (10) enroulé qui présente, par rapport à la spirale (20) cylindrique, un pas réduit, de préférence aucun pas.

2. Insert de filetage en fil métallique (1) selon la revendication 1, qui comprend un premier enroulement (42) qui s'étend le long d'un segment circonférentiel de la bride de fixation (40) en commençant à l'extrémité (28) de la spirale (20) cylindrique sur un angle γ d'au moins 180°, de préférence de 180° à 270°, et de façon encore plus préférée de 180° à 360°.

3. Insert de filetage en fil métallique (1) selon la revendication 2, qui comprend un premier enroulement (42) complet et un deuxième enroulement (42) qui s'étend le long d'un segment circonférentiel de la bride de fixation (40) en commençant à l'extrémité (29) du premier enroulement (42) sur un angle γ d'au moins 180°, de préférence de 180° à 270°, et de façon encore plus préférée de 180° à 360°.

4. Insert de filetage en fil métallique (1) selon la revendication 1, dont la bride de fixation (40) comprend au moins deux enroulements (42) du fil (10) enroulé superposés dans la direction radiale de la spirale (20) cylindrique, l'enroulement (42) radial extérieur de la bride de fixation (40) étant constitué au moins partiellement, en particulier complètement, autour de la spirale (20).

5. Insert de filetage en fil métallique (1) selon une des revendications précédentes, dont la paroi en spirale (22, 24) cylindrique présente, sur un côté extérieur (24) radial, au moins une rainure (26), de préférence une pluralité de rainures (26), placée dans la direction longitudinale de la spirale (20) cylindrique.

6. Insert de filetage en fil métallique (1) selon la revendication 1, dont le fil (10) possède une section transversale (50) formée de telle sorte que la paroi en spirale (22, 24) cylindrique fermée présente, sur un côté intérieur (22) radial, un filet standard, de préférence un filet intérieur métrique ou en pouces.

7. Insert de filetage en fil métallique (1) selon la revendication 1, dans lequel un profilé de section transversale (50) du fil présente radialement vers l'extérieur, par rapport à la spirale (20) cylindrique, un contour angulaire (54) avec deux flancs qui forment un angle α < 60°, de préférence un angle entre 30° et 40°.

8. Insert de filetage en fil métallique (1) selon la revendication 7, dont la section transversale (50) du fil est constituée de façon asymétrique par rapport à un côté intérieur (22) et un côté extérieur (24) radiaux de la paroi en spirale (20).

9. Insert de filetage en fil métallique (1) selon la revendication 1, dont l'extrémité de la spirale (20) présente, en face de l'extrémité dotée de la bride de fixation (40), un tenon (34) dépassant radialement vers l'intérieur ou une ouverture de passage libre.

10. Insert de filetage en fil métallique (1) selon la revendication 1, dans lequel une section transversale (50) du fil (10) présente, dans la direction axiale de la spirale (20), des faces frontales (56) de telle sorte que des faces frontales (56) d'enroulements (30) voisins sont adjacentes les unes aux autres.

11. Insert de filetage en fil métallique (1) selon la revendication 10, dont les faces frontales (56) d'enroulements (30) voisins sont formées de façon complémentaire les unes par rapport aux autres.

12. Insert de filetage en fil métallique (1) selon une des revendications précédentes, qui se compose d'un alliage métallique léger ou d'acier ou d'acier fin ou de cuivre ou de laiton.

13. Composant, composé de matière plastique ou de métal, dans lequel est formé un insert de filetage en fil métallique (1) selon une des revendications 1 à 12.

14. Procédé de fabrication d'un insert de filetage en fil métallique (1) conformable destiné à renforcer une ouverture de vissage d'un composant, qui présente les étapes suivantes :
a. enroulement d'un fil (10) en une spirale (20) cylindrique (S2) avec un diamètre tel que des enroulements (30) voisins de la spirale (20) cylindrique présentent un premier pas et forment une paroi en spirale (22, 24) cylindrique,
b. production d'une bride de fixation (40) dépassant de la paroi en spirale (22, 24) cylindrique radialement vers l'extérieur à au moins une extrémité de la spirale (20) (S3A) par enroulement d'au moins un enroulement (30) de la spirale (20) à une extrémité de la spirale (20) (S2A) avec un pas réduit par rapport au premier pas pour former la bride de fixation (40).

15. Procédé de fabrication selon la revendication 14, qui comprend en outre :
l'enroulement de la bride de fixation (40) de telle sorte que la bride de fixation (40) présente un diamètre plus grand que la spirale (20), en particulier par le fait que l'extrémité de la spirale (20) comprend au moins deux enroulements (42) (30) du fil (10) enroulé qui sont superposés dans la direction radiale de la spirale (20) cylindrique.

16. Procédé de fabrication selon la revendication 14, avec l'étape supplémentaire :
enroulement du fil (10) sur un mandrin d'enroulement (70), le mandrin d'enroulement (70) comprenant une première zone (72) cylindrique pour l'enroulement de la spirale (20) cylindrique et une deuxième zone (74), élargie dans la direction radiale par rapport à la première zone (72) cylindrique, pour l'enroulement de la bride de fixation (40).

17. Procédé de fabrication selon la revendication 16, avec l'étape supplémentaire :
enroulement de la bride de fixation (40) de telle sorte que le fil (10) est enroulé sur la deuxième zone (74) élargie du mandrin d'enroulement (70) qui s'élargit de façon constante ou bien par étapes, ou de telle sorte que le fil (10) est enroulé contre la deuxième zone (74) élargie qui constitue un épaulement par rapport à la première zone (72) cylindrique.

18. Procédé de fabrication selon la revendication 16 ou 17, avec l'étape supplémentaire :
enroulement du fil (10) sur le mandrin d'enroulement (70) de telle sorte qu'un axe longitudinal (L) du mandrin d'enroulement (70) dans la direction d'enroulement de l'insert de filetage en fil métallique (1) et une direction d'amenée du fil (DZ) du fil (10) à enrouler forment un angle β ≥ 90°.

19. Procédé de fabrication selon une des revendications 16 à 18, avec l'étape supplémentaire :
déplacement du mandrin d'enroulement (70) et du fil (10) à amener l'un par rapport à l'autre à une vitesse différente pendant l'enroulement du fil (10) sur la première zone (72) et la deuxième zone (74) du mandrin d'enroulement (70).

20. Procédé de fabrication selon la revendication 14, avec l'étape supplémentaire :
déroulement (S5) de la spirale (20) cylindrique avec la bride de fixation (40) à partir d'un mandrin d'enroulement (70) de telle sorte que, ensuite, des enroulements (30) voisins de la spirale (20) et de préférence de la bride de fixation (40) sont adjacents les uns aux autres de façon étanche.

21. Procédé de fabrication selon la revendication 14, avec l'étape supplémentaire :
accrochage (S1) du fil (10) à enrouler dans une encoche (76) du mandrin d'enroulement (70) et production d'un tenon (34) placé radialement vers l'intérieur à l'extrémité de la spirale (20) éloignée de la bride, par enroulement du fil (10) sur le mandrin d'enroulement (70).

22. Procédé de fabrication selon la revendication 14, avec l'étape supplémentaire :
production d'au moins une rainure (26) placée dans la direction axiale sur un côté extérieur (24) radial de la spirale (20) (S4), de préférence par fraisage.

23. Procédé de fabrication d'un composant avec un insert de filetage en fil métallique (1) conformé, qui présente une spirale (20) cylindrique qui est formée d'un fil (10) enroulé en forme d'hélice et dont au moins une extrémité comprend une bride de fixation (40) qui s'étend radialement vers l'extérieur au-delà de la spirale (20) cylindrique, en particulier un insert de filetage en fil métallique (1) selon une des revendications 1 à 12, le composant étant composé de matière plastique ou de métal, et le procédé présentant les étapes suivantes :
a. positionnement (A, B) de l'insert de filetage en fil métallique (1) sur une broche (92),
b. disposition (C) de la broche (92) avec l'insert de filetage en fil métallique (1) dans un moule (90) de telle sorte que, après un démoulage du composant, la bride de fixation (40) est disposée de façon adjacente à une surface du composant,
c. remplissage (D) du moule (90) avec du métal ou de la matière plastique, et
d. démoulage hors du moule (90) du composant (E) avec l'insert de filetage en fil métallique (1).

24. Fabrication d'un composant selon la revendication 23, qui, dans une autre forme d'exécution de l'étape a, présente :
le mandrinage (A) de l'insert de filetage en fil métallique (1) sur la broche (92) qui présente un filet adapté à l'insert de filetage en fil métallique (1), ou
l'enfichage (B) de l'insert de filetage en fil métallique (1) sur une broche (92) sans filet.

25. Fabrication d'un composant selon la revendication 23, qui, dans une autre forme d'exécution de l'étape c, présente :
le moulage par injection (D) de matière plastique dans le moule (90) pour la fabrication du composant.

26. Mandrin d'enroulement (70) pour l'enroulement d'un insert de filetage en fil métallique (1) conformable, qui présente les caractéristiques suivantes :
a. une première zone (72) cylindrique avec un filet et
b. une deuxième zone (74) qui est élargie dans la direction radiale par rapport à la première zone (72) de telle sorte qu'à l'aide de la deuxième zone (74) une bride de fixation (40) de l'insert de filetage en fil métallique (1) conformable peut être fabriquée.

27. Mandrin d'enroulement (70) selon la revendication 26, dont la deuxième zone (74) élargie est élargie de façon constante ou par étapes par rapport à la première zone (72).

28. Mandrin d'enroulement (70) selon la revendication 26, dont la deuxième zone (74) élargie est constituée en une seule étape et qui constitue un épaulement par rapport à la première zone (72) cylindrique.

29. Mandrin d'enroulement (70) selon la revendication 26, qui présente, à une extrémité de la première zone (72) cylindrique, une encoche (76) dans laquelle un fil (10) à enrouler peut être fixé pour, lors de l'enroulement d'un insert de filetage en fil métallique (1), former un tenon (34) placé radialement vers l'intérieur.

30. Mandrin d'enroulement (70) selon la revendication 26, dont la deuxième zone est disposée en formant un angle de 90° à 120° par rapport à l'axe longitudinal du mandrin d'enroulement (70).
